# EUROPEAN PATENT APPLICATION

(11) **EP 4 796 988 A1**
(43) Date of publication of application: **26.08.2026**
(21) Application number: 24880207.6
(22) Date of filing: 21.10.2024
(51) Int. Cl.: G02F 1/1335, G02F 1/1337, G02B 27/10, G03B 21/00, G06V 40/16

(54) **BEAM SPLITTER**

(30) Priority: 20.10.2023 KR 20230141223
(71) Applicant: LG Chem, Ltd., Seoul 07336 (KR)
(72) Inventor: LEE, Yeon Keun, Daejeon 34122 (KR)
(74) Representative: Goddar, Heinz J.
(86) International application number: PCT/KR2024/015964
(87) International publication number: WO 2025/084870

(57) **Abstract**

The present specification discloses a beam splitter and a use thereof. The beam splitter can split a beam from a light source into multiple beams having desired shapes and intensities, and such a beam splitter can be implemented with simple constitutions and processes. The beam splitter can be applied to, for example, constituting facial recognition devices or various sensing devices, and the like for 3D mapping.

## Description

### Technical field

This application claims the benefit of priority based on Korean Patent Application No. 10-2023-0141223 dated October 20, 2023, the disclosure of which is incorporated herein by reference in its entirety.

This specification discloses a beam splitter and a use thereof.

### Background art

A beam splitter is an optical component capable of generating two or more light rays from one incident light.

As traditional beam splitters, a so-called cube beam splitter composed by using two right angle prisms and a plate beam splitter composed of a thin and flat glass plate having a coating layer on the surface, and the like are known.

Such beam splitters are used for various purposes.

For example, the beam splitter is necessary for constituting an interferometer, or the like, which is an important element in various optical experiment or optical measurement devices, and is also an important element in a field such as fiber optic telecommunication.

The beam splitter can also be applied to constituting a dot projector, which is required for constituting a sensing device such as facial recognition technology. For example, Patent Document 1 discloses an optical projection device for 3D mapping. Patent Document 1 uses DOEs (Diffractive Optical Elements) to generate optical replicas for the 3D mapping.

### <Prior Art Documents>

### <Patent Documents>

(Patent Document 1) Korean Laid-Open Patent Publication No. 10-2016-0019113

### Disclosure

### Technical Problem

The present specification is intended to disclose a beam splitter and a use thereof. The beam splitter can split a beam from a light source into multiple beams having desired shapes and intensities, and such a beam splitter can be implemented with simple constitutions and processes. The beam splitter can be applied to, for example, constituting facial recognition devices or various sensing devices, and the like for 3D mapping.

### Technical Solution

The present specification discloses a beam splitter.

The term beam splitter means an optical element capable of splitting one incident beam into two or more beams.

The beam splitter may split incident light with a wavelength of λ to generate two or more split light rays. Here, the wavelength λ is the wavelength of light to be split, which may be determined according to the purpose.

Unless otherwise specified in this specification, the incident beam or incident light means a beam incident to the beam splitter, and the split beam or split light means a beam split by the beam splitter.

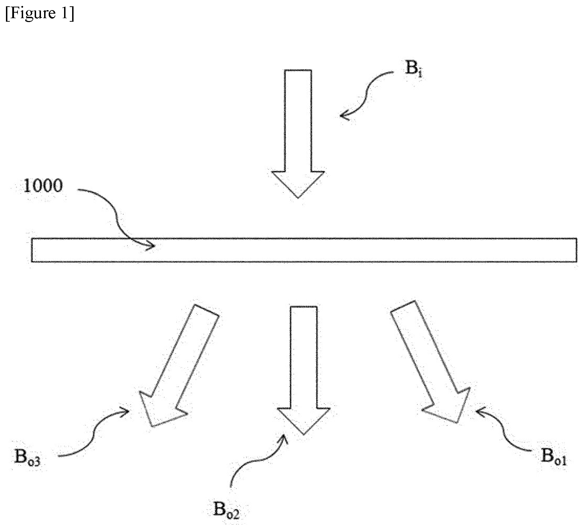

Figure 1 shows an exemplary beam splitter (1000). The beam splitter (1000) of Figure 1 splits an incident beam (Bᵢ) into at least three split beams (Bₒ₁, Bₒ₂, Bₒ₃).

For example, the lower limit of the number of split beams generated by the beam splitter from one incident beam may be 2, 3, 4, 5, 6, 7, 8, or 9 or so, and the upper limit thereof may be 100, 95, 90, 85, 80, 75, 70, 65, 60, 55, 50, 45, 40, 35, 30, 25, 20, 15, 14, 13, 12, 11, 10, or 9 or so. The number of the split beams may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The beam splitter may comprise at least one geometric phase orientation layer. The geometric phase orientation layer is known as an element recording wave fronts of light on a recording medium using holographic polarization interference patterns, which is a flat optical device that can be manufactured thinner than existing devices utilizing dynamic phase differences. The geometric phase orientation layer is also called a so-called PBP (pancharatnam berry phase) optical device.

The geometric phase orientation layer may be a liquid crystal layer.

For example, the geometric phase orientation layer may comprise an oriented liquid crystal compound.

The geometric phase orientation layer may be a liquid crystal layer comprising an oriented liquid crystal compound. The orientation of the liquid crystal compound may be the geometric phase orientation. For example, the lower limit of the content of the oriented liquid crystal compound included in the liquid crystal layer may be 50 weight%, 55 weight%, 60 weight%, 65 weight%, 70 weight%, 75 weight%, 80 weight%, 85 weight%, 90 weight%, or 95 weight% or so, based on the total weight of the liquid crystal layer, and the upper limit thereof may be 100 weight%, 98 weight%, 96 weight%, 94 weight%, 92 weight%, or 90 weight% or so, based on the total weight of the liquid crystal layer. The content may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The liquid crystal layer may be an active liquid crystal layer or a passive liquid crystal layer. The term active liquid crystal layer means a liquid crystal layer in which the orientation of the liquid crystal compound in the liquid crystal layer is not fixed, and switchable by an external action (for example, application of an external electric field), and the term passive liquid crystal layer means a liquid crystal layer in which the orientation of the liquid crystal compound is fixed and does not change by an external action. For example, the passive liquid crystal layer may be formed when the orientation is fixed by polymerization or the like after a so-called RM (Reactive Mesogen) is oriented.

The liquid crystal compound of the liquid crystal layer is oriented in a geometric phase, whereby the geometric phase orientation layer may be formed

The liquid crystal compound in the liquid crystal layer may be in a so-called geometric phase orientation state. The geometric phase orientation means orientation in which the liquid crystal layer (geometric phase orientation layer) functions as a so-called geometric phase lens or geometric phase grating due to the orientation of the liquid crystal compound.

The orientation form of the liquid crystal compound to enable the liquid crystal layer to function as the geometric phase lens or geometric phase grating is known.

When the orientation of the liquid crystal compound is the orientation capable of functioning as the geometric phase lens, the relevant orientation can be called a geometric phase lens orientation, and the geometric phase orientation layer can be called a geometric phase lens orientation layer. When the orientation of the liquid crystal compound is the orientation capable of functioning as the geometric phase grating, the relevant orientation can be called a geometric phase grating orientation, and the geometric phase orientation layer can be called a geometric phase grating orientation layer.

The geometric phase orientation can be generally defined as orientation having spatially varying azimuth angles. For example, when the orientation is the orientation of the liquid crystal compound, the azimuth angle is formed by the direction of the in-plane optical axis of the liquid crystal compound.

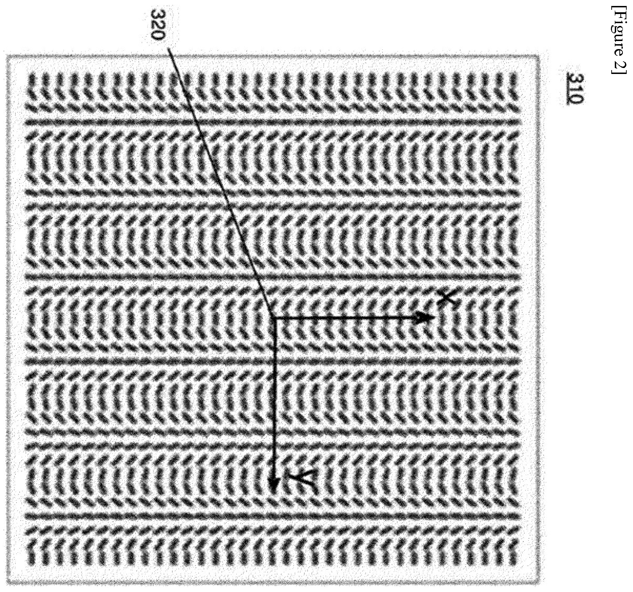

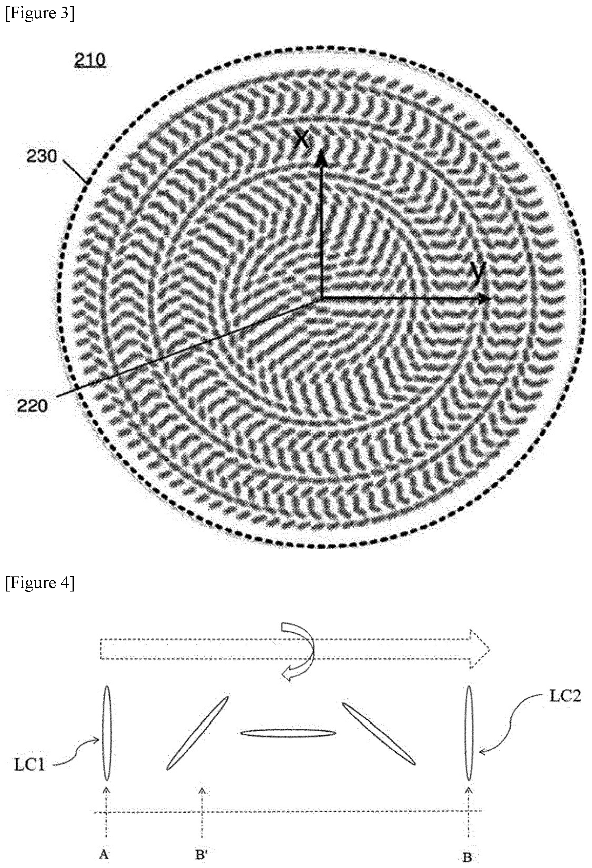

Figure 2 is a schematic diagram showing one exemplary geometric phase grating orientation (310), and Figure 3 is a schematic diagram showing one exemplary orientation (210) of a geometric phase lens.

The liquid crystal layer illustrated in Figure 2 generates a corresponding grating profile through the in-plane orientation of the liquid crystal compound. The in-plane orientation of the liquid crystal compound can be defined by an azimuth angle (θ), which generates an optical phase difference T, and the optical phase difference T can be defined as 2θ by the azimuth angle.

Figure 2 is a diagram showing an example of the orientation (310) of the liquid crystal compound in the geometric phase grating orientation. In Figure 2, the X-axis and the Y-axis are virtual axes arbitrarily set at the center point (320) of the orientation. The orientation of the liquid crystal compound in the orientation can be defined by the azimuth angle (θ) continuously changing along an arbitrary specific direction (the Y-axis direction in the case of Figure 2). In the orientation of Figure 2, a pitch (P) is substantially fixed.

In this specification, the term pitch or pitch distance of the geometric phase orientation refers to a distance determined by rotation of the liquid crystal compound rotating to have an azimuth angle changing along an arbitrary in-plane direction, which is a distance between a point (point A) where one liquid crystal compound in an arbitrary in-plane direction exists and a point (point B) where a liquid crystal compound having the same azimuth angle as the liquid crystal compound at point A exists while the liquid crystal compound rotates along the arbitrary in-plane direction (i.e., distance between points A and B).

For example, the distance between points A and B in Figure 4 may be the pitch or pitch distance. In this case, since points A and B have the same orientation direction of the liquid crystal compound, the pitch may be confirmed by measuring the distance between points A and B in a direction perpendicular to the same orientation direction.

This pitch or pitch distance may also be confirmed by Equation 1 below. $P = 180 \times D / Ag$

In Equation 1, P is the pitch or pitch distance, D is a distance between two arbitrary points within a direction where the azimuth angle of the liquid crystal compound changes on the plane of the geometric phase orientation layer, and Ag is a smaller angle among angles formed by orientation directions of the liquid crystal compound existing at the two arbitrary points. The D may be the distance between two arbitrary points included in one pitch.

For example, referring to Figure 4, the pitch or pitch distance may be the distance between points A and B, but may also be obtained by substituting the distance between points A and B' as D above and the smaller angle among the angles formed by the orientation directions of the liquid crystal compound at point A and the orientation directions of the liquid crystal compound at point B' as Ag above into Equation 4.

The units of D and P in Equation 1 are not particularly limited if the same unit is applied to each other. In addition, the unit of Ag in Equation 1 is degrees.

In this specification, the case where it is simply referred to as a pitch or pitch distance means a case where the azimuth angle change occurs in one rotation direction, which may be called a normal pitch or normal pitch distance. Figure 4 is one example of such a normal pitch. In Figure 4, the rotation from the liquid crystal compound (LC1) at the starting point of one pitch to the liquid crystal compound (LC2) at the end point of the pitch occurs clockwise along the azimuth angle change direction (dotted one-way arrow direction in Figure 4).

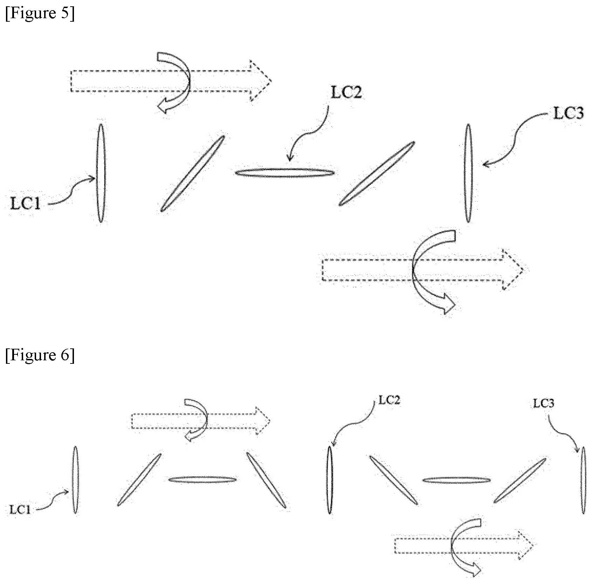

In this specification, the case where it is referred to as a bidirectional pitch or bidirectional pitch distance means a pattern in which the rotation direction of the azimuth angle change changes at least once along the azimuth angle change direction. Such patterns are exemplified in Figures 5 and 6.

In the pattern of Figure 5, the rotation from the liquid crystal compound (LC1) at the starting point of one pitch to the liquid crystal compound (LC2) at the middle point of the pitch is performed clockwise along the azimuth angle change direction (dotted one-way arrow direction at the top of Figure 5), and then the rotation from the liquid crystal compound (LC2) at the middle point to the liquid crystal compound (LC3) at the end point of the pitch is performed counterclockwise.

In the pattern of Figure 6, as another example of the pattern of the bidirectional pitches, the rotation from the liquid crystal compound (LC1) at the starting point of one pitch to the liquid crystal compound (LC2) at the end point of the pitch is performed clockwise along the azimuth angle change direction (dotted one-way arrow direction at the top of Figure 6), and then the rotation from the liquid crystal compound (LC2) to the liquid crystal compound (LC3) at the end point of another pitch is performed counterclockwise.

In the case where the rotation direction changes within one pitch, as in Figure 5, it may be called a 90-degree bidirectional pitch in this specification, and in the case where the rotation direction changes between one pitch and another pitch, as in Figure 6, it may be called a 180-degree bidirectional pitch in this specification.

In this specification, the azimuth angle change direction is an arbitrary direction where the pitch is completed by the azimuth angle change of the liquid crystal compound.

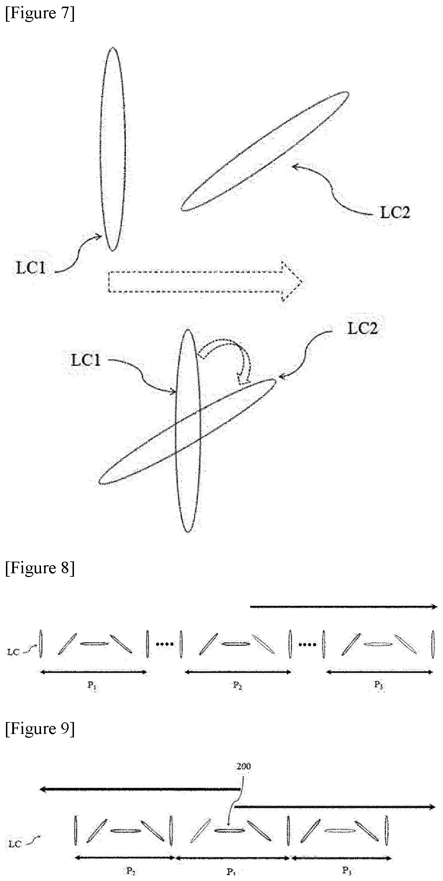

In defining the normal pitch or bidirectional pitch in this specification, the rotation direction is a direction where the smaller angle (90 degrees when the angle formed by the adjacent liquid crystal compounds is 90 degrees) among the angles formed by the adjacent liquid crystal compounds is completed, which is a direction along the azimuth angle change direction. In this case, the direction along the azimuth angle change direction is a direction where the smaller angle (or 90 degrees) is completed from the first existing liquid crystal compound toward the next existing liquid crystal compound along the azimuth angle change direction. For example, in Figure 7, when the azimuth angle change direction is the dotted one-way arrow direction and the liquid crystal compounds LC1 and LC2 change as exemplified at the top of the dotted one-way arrow, the rotation direction between the liquid crystal compounds LC1 and LC2 is clockwise. The rotation direction varies depending on how the azimuth angle change direction is designated. For example, in the example of Figure 7, if the azimuth angle change direction is from the left to the right of the drawing, the rotation direction becomes clockwise, but if it is from the right to the left, the rotation direction becomes counterclockwise. Therefore, in distinguishing the patterns of the normal pitch and the bidirectional pitch, the azimuth angle change direction is arbitrarily designated, but when all the rotation directions are confirmed, one direction is designated as the azimuth angle change direction.

Figure 8 is a schematic diagram of orientation of a liquid crystal compound (LC) rotating along one arbitrary in-plane direction (one-way arrow direction in Figure 8, in the case of Figure 2, this direction is along the Y-axis direction), where the pitches (or pitch distances) are indicated by P₁, P₂, and P₃. In the geometric phase grating orientation, in general, the pitch change rate is substantially fixed. For example, in Figure 8, the pitches P₁, P₂, and P₃ are substantially the same as each other. In the geometric phase grating orientation, the orientation of the liquid crystal compound may be orientation having an azimuth angle changing along at least one direction of the plane directions of the liquid crystal layer, and usually the pitch due to the changing azimuth angle is substantially fixed constantly.

In the exemplary geometric phase grating orientation of Figure 2, the azimuth angle of the liquid crystal compound is maintained constantly along the plane direction (X-axis direction in Figure 2) perpendicular to one direction (Y-axis direction in Figure 2) where the azimuth angle changes, but the form of the geometric phase grating orientation is not limited thereto.

In this specification, the facts that the pitch of the azimuth angle change is fixed and that the azimuth angle is maintained constantly are the fact that the change in the pitch and azimuth angle does not substantially exist, where the fact that the change does not substantially exist may mean the case that even if there is a slight change in some portions of the pitch and azimuth angle, the liquid crystal layer or the optical film can effectively perform the function of the geometric phase grating as a whole.

In the geometric phase grating orientation, the pitch in one direction where the azimuth angle changes may be adjusted according to the purpose of the geometric phase grating. Since the diffraction angle (refraction angle) by the geometric phase grating orientation generally satisfies Equation 2 below according to the pitch and the reference wavelength, an appropriate pitch may be set in consideration of the desired refraction angle.$sinθ = λ / P$

In Equation 2, θ is the diffraction angle, λ is the reference wavelength (unit: nm), and P is the pitch (unit: nm). The reference wavelength of Equation 2 is adjusted according to the wavelength of the beam to be diffracted, and the pitch is set according to the wavelength and the desired diffraction angle.

In the geometric phase lens orientation of Figure 3, the liquid crystal layer also generates a lens profile corresponding through the in-plane orientation of the liquid crystal compound. The in-plane orientation of the liquid crystal compound may be defined by the azimuth angle (θ), which generates an optical phase difference T, where the optical phase difference T may be defined as 2θ by the azimuth angle.

In the geometric phase lens orientation, the azimuth angle (θ) of the liquid crystal compound continuously changes along the direction from the center (220) of the liquid crystal layer toward the edge (230), thereby generating a changing pitch (P). The meaning of the pitch is the same as in the case of the geometric phase grating. In the geometric phase lens, the pitch may be expressed as a function according to a distance (r) from an arbitrary point (in the case of Figure 3, the center (220) of the liquid crystal layer).

In the geometric phase lens, the azimuth angle may satisfy a relationship of Equation 3 below according to the distance.$θ \left(r\right) = \left\{π\times {r}^{2}\right\} / \left\{2\times f\times λ\right\}$

In Equation 3, θ (r) is the azimuth angle of the liquid crystal compound in the region of the liquid crystal layer separated from the center of the geometric phase lens orientation by a distance r (unit: mm), r is the distance, f is a focal length of the geometric phase lens orientation, and λ is the reference wavelength (unit: mm).

In Equation 3, the reference wavelength is adjusted according to the wavelength of the beam to be diffracted, and the pitch of the geometric phase lens is set depending on the focal length (f) to be achieved and the size of the liquid crystal layer, according to Equation 3.

Figure 9 is a diagram exemplarily showing orientation of the liquid crystal compound along the Y-axis of the liquid crystal layer of Figure 3. From Figure 9, it can be confirmed that the pitch change rate is a function of the distance (r) from the center (220) of the liquid crystal layer. The pitch change rate becomes faster as the distance increases. For example, pitches P₁, P₂, and P₃ in Figure 9 have relationships of P₁>P₂ and P₁>P₃.

In the geometric phase lens orientation, the orientation of the liquid crystal compound may be oriented to have an azimuth angle changing according to the distance along at least one direction among the plane directions of the liquid crystal layer.

In the geometric phase lens orientation, the azimuth angle change may satisfy Equation 3 above.

As can be seen with reference to Figure 3, the azimuth angle change in the geometric phase lens orientation may appear radially within the plane of the liquid crystal layer. However, the form in the geometric phase lens orientation is not limited thereto.

It may be confirmed, for example, through a polarization microscope whether the liquid crystal layer is in the geometric phase orientation. That is, in the geometric phase orientation, the liquid crystal compound rotates to have a changing azimuth angle, so that upon observation through the polarization microscope, it shows a pattern in which relatively dark shaded lines and relatively light shaded lines are repeated along the azimuth angle. Therefore, if the repetition of the line pattern is confirmed through the polarization microscope, it can be regarded that the liquid crystal layer is in the geometric phase orientation.

The pitch of the geometric phase orientation can also be confirmed from the image of the polarization microscope. For example, in the case of the normal pitch in which the rotation direction of the liquid crystal compound in the orientation does not change along the azimuth angle change direction, the distance required for the liquid crystal compound to rotate 180 degrees from its initial state is the pitch, and the dark line or the light line appears when the rotation of 90 degrees is completed, so that the distance between two dark shaded lines (or light shaded lines), which are located most outside, of three adjacent dark shaded lines (or light shaded lines) in the polarization microscope image may be approximately designated as the pitch.

The method of confirming whether the liquid crystal layer is in the geometric phase orientation and the pitch is not limited to the foregoing.

The beam splitter disclosed in the present specification comprises at least one geometric phase orientation layer. The geometric phase orientation layer may be a geometric phase grating orientation layer.

The geometric phase orientation layer included in the beam splitter may be controlled so that the so-called zero-order transmittance or intensity is in a certain level or more.

The zero-order transmittance or intensity means the transmittance or intensity of light that is substantially not diffracted by the geometric phase orientation layer and is transmitted among light incident on the geometric phase orientation layer, or light that transmits the geometric phase orientation layer in the same direction as the incident light. The light that is substantially not diffracted by the geometric phase orientation layer and is transmitted, or the light that transmits the geometric phase orientation layer in the same direction as the incident light may be referred to as a zero-order transmitted light ray in this specification.

The contents will be described with reference to the drawings.

The geometric phase orientation layer is basically an element for diffraction of light. Therefore, the light incident on the geometric phase orientation layer is diffracted and transmitted, so that the zero-order transmittance or intensity in a general geometric phase orientation layer is designed to be substantially 0%.

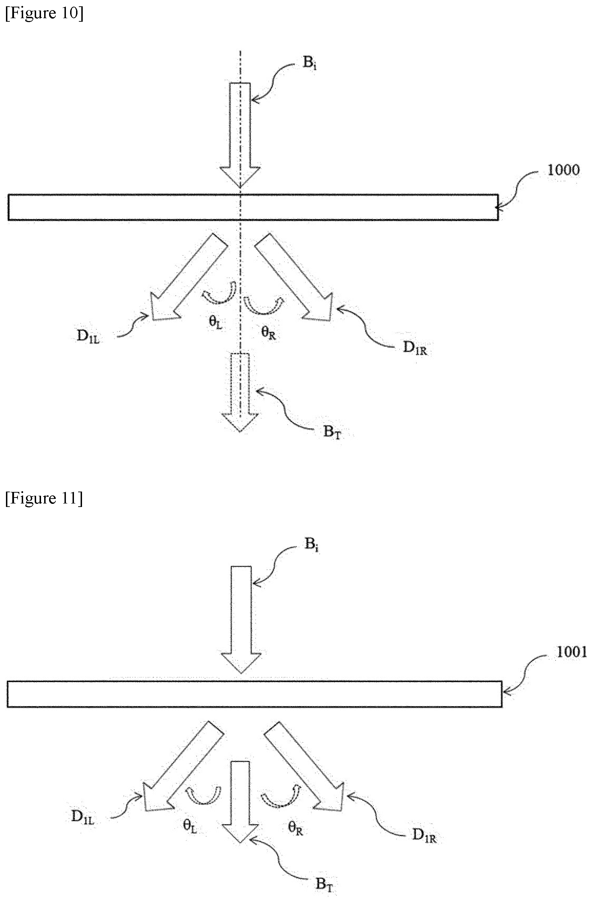

Figure 10 is a diagram schematically showing a diffraction phenomenon in a conventional geometric phase grating orientation layer.

As in Figure 10, if light (Bᵢ) is incident on a geometric phase grating orientation layer (1000), a diffracted light ray, which forms a constant diffraction angle (θ_{L}, θ_{R}) along each of the counterclockwise and clockwise directions based on the incident direction of the incident light (Bᵢ), is emitted. For example, if unpolarized light (Bi) is incident on a geometric phase grating orientation layer, at least two diffracted light rays (D_{1R}, D_{1L}) may be generated, where usually, one of the two diffracted light rays (D_{1R}, D_{1L}) is left-circularly polarized light, and the other is right-circularly polarized light. The diffraction angles (θ_{L}, θ_{R}) of the diffracted light rays (D_{1R}, D_{1L}) are determined according to the type of liquid crystal compound applied to the geometric phase grating orientation layer, the pitch and/or thickness of the orientation layer, and the like.

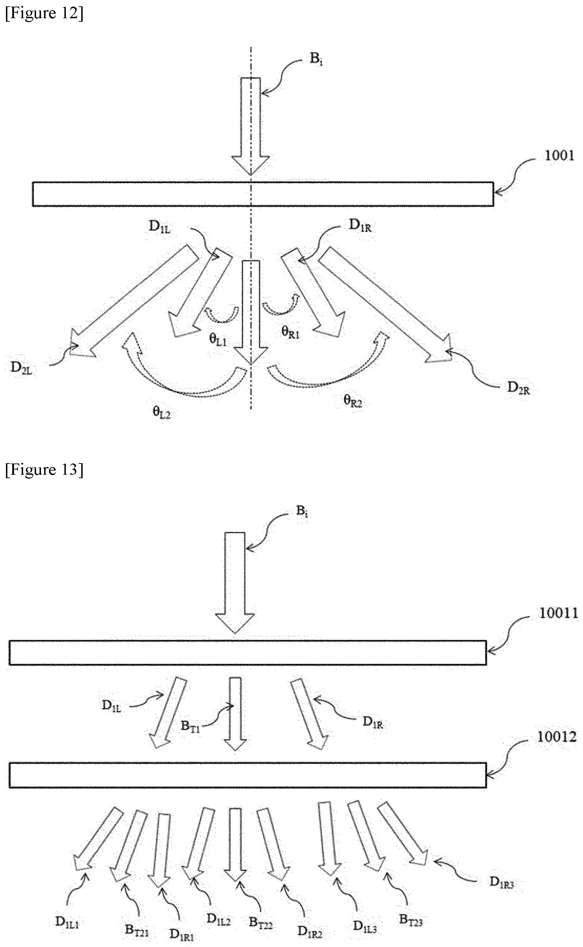

In this specification, among diffracted light rays, the diffracted light ray existing along the counterclockwise direction based on the incident direction of the incident light (Bᵢ) and existing while forming a predetermined diffraction angle with the incident direction may be called the diffracted light ray or transmitted light ray of the (positive) first order, (positive) second order, and (positive) higher order, respectively, depending on the sizes of the diffraction angle. For example, referring to Figure 12, based on the side observation of the geometric phase orientation layer (1001), two diffracted light rays (D_{1R}, D_{2R}) exist along the counterclockwise direction based on the incident direction of the incident light (Bᵢ). The two diffracted light rays (D_{1R}, D_{2R}) form two diffraction angles θ_{R1} and θ_{R2}, respectively, along the incident direction and the counterclockwise direction. In this case, the diffracted light ray (D_{1R}) forming the smallest diffraction angle (θ_{R1}) among the plurality of diffraction angles may be designated as the (positive) first-order diffracted light ray or the (positive) first-order transmitted light ray, and the diffracted light ray (D_{2R}) forming the next largest diffraction angle (θ_{R2}) may be designated as the (positive) second-order diffracted light ray or the (positive) second-order transmitted light ray, and in the same manner, the (positive) 3 or higher-order diffracted light ray or transmitted light ray may also be designated (if present).

In this specification, among the diffracted light rays, the diffracted light ray existing along a clockwise direction based on the incident direction of the incident light (Bᵢ) and existing while forming a predetermined diffraction angle with the incident direction may be called the diffracted light ray or transmitted light ray of the negative first order, negative second order, and negative higher negative order (minus order), respectively, depending on the sizes of the diffraction angle. For example, referring to Figure 12, based on the side observation of the geometric phase orientation layer (1001), there are two diffracted light rays (D_{1L}, D_{2L}) in a clockwise direction based on the incident direction of the incident light (Bᵢ). The two diffracted light rays (D_{1L}, D_{2L}) form two diffraction angles θ_{L1} and θ_{L2}, respectively, along the incident direction and the clockwise direction. In this case, the diffracted light ray (D_{1L}) forming the smallest diffraction angle (θ_{L1}) among the plurality of diffraction angles may be designated as the negative first-order diffracted light ray or the negative first-order transmitted light ray, and the diffracted light ray (D_{2R}) forming the next largest diffraction angle (θ_{L2}) may be designated as the negative second-order diffracted light ray or the negative second-order transmitted light ray, and in the same manner, the negative-order diffracted light ray or transmitted light ray of -3 or higher order may also be designated (if present).

In Figure 10, the un-diffracted light ray (B_{T}) is indicated by a dotted line. Since the purpose of the conventional geometric phase grating orientation layer (1000) is to diffract the incident light (Bᵢ), the un-diffracted light ray (B_{T}) is controlled so as not to be substantially generated.

The geometric phase orientation layer (e.g., the geometric phase grating orientation layer) included in the beam splitter disclosed in the present specification is configured so that the zero-order transmitted light ray (B_{T}) has transmittance or intensity in a certain level or more, unlike the conventional art exemplified in Figure 10. Such an example is shown in Figure 11.

There is no special limitation on the method of generating the zero-order transmitted light ray as above for the geometric phase orientation layer, and for example, a method of selecting the type of liquid crystal compound applied to the geometric phase orientation layer considering the wavelength of the incident light (Bᵢ) to be split, a method of adjusting the pitch of the geometric phase orientation layer considering the wavelength of the incident light (Bᵢ) to be split, and/or a method of adjusting the thickness of the geometric phase orientation layer considering the wavelength of the incident light (Bᵢ) to be split may be applied.

For example, the zero-order transmitted light ray may be generated by adjusting the thickness of the geometric phase orientation layer and/or the refractive index anisotropy of the liquid crystal compound forming the orientation layer according to Equation 4 below.$Δn \times T - λ / 2 \neq 0$

In Equation 4, Δn is the refractive index anisotropy of the liquid crystal compound forming the geometric phase orientation layer, T is the thickness of the geometric phase orientation layer, and λ is the wavelength of the light to be split.

The Δn is confirmed in a state where the liquid crystal compound forming the geometric phase orientation layer is oriented uniaxially (homogeneously), which is the refractive index anisotropy for the wavelength λ, i.e., the light to be split.

In addition, the same unit is applied to the units of T and λ in Equation 4. In one example, the unit of T and λ for calculation of Equation 4 may be nm or µm.

Since the zero-order transmitted light ray is minimized when the geometric phase orientation layer has a thickness corresponding to a so-called HWP (Half Wave Plate) for incident light, the zero-order transmitted light ray can be generated by adjusting the refractive index anisotropy and/or thickness of the liquid crystal compound forming the geometric phase orientation layer according to Equation 4, and the degree of the zero-order transmitted light ray can be controlled.

For example, the ratio of Δn×T to λ/2 in Equation 4, i.e., (2×Δn×T)/λ, may be within a predetermined range while not being 1. In such a range, the zero-order transmitted light ray can be generated, and the generation degree of the zero-order transmitted light ray can be controlled according to the desired level of transmittance or intensity.

For example, the lower limit of (2×Δn×T)/λ may be 0.1, 0.15, 0.2, 0.25, 0.3, 0.35, 0.4, 0.45, 0.5, 0.55, 0.6, 0.65, 0.7, 0.75, 0.8, 0.85, 0.9, or 0.95 or so, and the upper limit thereof may be 1, 0.99, 0.95, 0.9, 0.85, 0.8, 0.75, 0.7, 0.65, 0.6, 0.55, or 0.5 or so. The (2×Δn×T)/λ may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. In this case, the (2×Δn×T)/λ is not 1.

In another example, the lower limit of (2×Δn×T)/λ may be 1, 1.05, 1.1, 1.15, 1.2, 1.25, 1.3, 1.35, 1.4, 1.45, or 1.5 or so, and the upper limit thereof may be 3, 2.95, 2.9, 2.85, 2.8, 2.75, 2.7, 2.65, 2.6, 2.55, 2.5, 2.45, 2.4, 2.35, 2.3, 2.25, 2.2, 2.15, 2.1, 2.05, 2.00, 1.95, 1.9, 1.85, 1.8, 1.75, 1.7, 1.65, 1.6, 1.55, 1.5, 1.45, 1.4, 1.35, 1.3, 1.25, 1.2, 1.15, 1.1, or 1.05 or so. The (2×Δn×T)/λ may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. Even in this case, the (2×Δn×T)/λ is not 1.

In another example, the thickness of the geometric phase orientation layer and/or the refractive index anisotropy of the liquid crystal compound forming the orientation layer may be adjusted so that the value of K in Equation 5 below is within a predetermined range.$K = {sin}^{2} \left\{\left(π\times Δn\times T\right)/λ\right\}$

In Equation 5, Δn is the refractive index anisotropy of the liquid crystal compound forming the geometric phase orientation layer, T is the thickness of the geometric phase orientation layer, and λ is the wavelength of light to be split.

The Δn is confirmed in a state where the liquid crystal compound forming the geometric phase orientation layer is oriented uniaxially (homogeneously), which is the refractive index anisotropy for the wavelength λ, i.e., the light to be split.

In Equation 5, the same unit is applied to T and λ. In one example, the unit of T and λ for calculation of Equation 5 may be nm or µm.

In one example, the lower limit of K in Equation 5 may be 0.01, 0.05, 0.1, 0.2, 0.3, 0.4, 0.5, 0.6, 0.7, or 0.8 or so, and the upper limit thereof may be 1.5, 1.4, 1.3, 1.2, 1.1, 1.0, 0.95, 0.9, 0.85, 0.8, 0.75, 0.7, 0.65, or 0.6 or so. The K may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The λ in Equations 4 and 5 is the wavelength of the light to be split, as described above. However, for example, when the light to be split is light in the infrared region (for example, any one wavelength within the region of about 600 to 2,000 nm, or any one wavelength within the region of 700 to 1,500 nm), it is sometimes difficult to measure the refractive index anisotropy Δn of the liquid crystal compound. In such a case, the shape of the orientation layer may be adjusted based on the light with a wavelength of 550 nm to form a beam splitter.

For example, to form a desired beam splitter, the thickness of the geometric phase orientation layer and/or the refractive index anisotropy of the liquid crystal compound forming the orientation layer may be adjusted according to Equation 6 below.$Δn \times T - λ / 2 \neq 0$

In Equation 6, Δn is the refractive index anisotropy of the liquid crystal compound forming the geometric phase orientation layer based on the wavelength of 550 nm, T is the thickness of the geometric phase orientation layer, and λ is 550 nm.

The Δn may be confirmed in a state where the liquid crystal compound forming the geometric phase orientation layer is oriented uniaxially (homogeneously).

In Equation 6, the unit of T may be nm.

For example, the ratio of Δn × T to λ/2 in Equation 6 above, that is, (2 × Δn × T) / λ, may be within a predetermined range while not being 1. In such a range, the zero-order transmitted light ray can be generated for light in the infrared region, and the generation degree of the zero-order transmitted light ray can be controlled according to the desired level of transmittance or intensity.

For example, the lower limit of (2×Δn×T)/λ may be 0.1, 0.15, 0.2, 0.25, 0.3, 0.35, 0.4, 0.45, 0.5, 0.55, 0.6, 0.65, 0.7, 0.75, 0.8, 0.85, 0.9, or 0.95 or so, and the upper limit thereof may be 1, 0.99, 0.95, 0.9, 0.85, 0.8, 0.75, 0.7, 0.65, 0.6, 0.55, or 0.5 or so. The (2×Δn×T)/λ may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. In this case, (2×Δn×T)/λ is not 1.

In another example, the lower limit of (2×Δn×T)/λ may be 1, 1.05, 1.1, 1.15, 1.2, 1.25, 1.3, 1.35, 1.4, 1.45, 1.5, or 1.6 or so, and the upper limit thereof may be 3, 2.95, 2.9, 2.85, 2.8, 2.75, 2.7, 2.65, 2.6, 2.55, 2.5, 2.45, 2.4, 2.35, 2.3, 2.25, 2.2, 2.15, 2.1, 2.05, 2.00, 1.95, 1.9, 1.85, 1.8, 1.75, 1.7, 1.65, 1.6, 1.55, 1.5, 1.45, 1.4, 1.35, 1.3, 1.25, or 1.2 or so. The (2×Δn×T)/λ may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits. In this case, the (2×Δn×T)/λ is not 1.

The range of the value (hereinafter, K₅₅₀) obtained by applying 550 nm as λ in K of Equation 5 above and substituting the refractive index anisotropy of the liquid crystal compound based on a wavelength of 550 nm as Δn may also be adjusted.

In another example, the thickness of the geometric phase orientation layer and/or the refractive index anisotropy of the liquid crystal compound forming the orientation layer may be adjusted so that the value of K in Equation 5 below is within a predetermined range.

For example, the lower limit of the K₅₅₀ may be 0, 0.00005, 0.0001, 0.0003, 0.0005, 0.0007, 0.0009, 0.001, 0.0015, or 0.002 or so, and the upper limit thereof may be 0.5, 0.1, 0.05, 0.01, 0.008, 0.006, 0.004, 0.003, or 0.001 or so. The K₅₅₀ may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

In another example, the zero-order transmitted light ray may be generated by adjusting the orientation pattern of the liquid crystal compound included in the geometric phase orientation layer. For example, the zero-order transmitted light ray may be generated even when defects in the orientation are induced by inducing a discontinuous change in the orientation angle of the liquid crystal compound and/or a change in the pitch.

The method of generating the zero-order transmitted light ray and adjusting the degree thereof is not limited to the foregoing.

The lower limit of the transmittance or intensity of the zero-order transmitted light ray may be 0.2%, 0.4%, 0.6%, 0.8%, 1.0%, 1.5%, 2%, 2.5%, 3%, 3.5%, 4%, 4.5%, 5%, 7%, 9%, 11%, 13%, 15%, 17%, 19%, 21%, 23%, 25%, 27%, 29%, 31%, or 33% or so, and the upper limit thereof may be 70%, 68%, 66%, 64%, 62%, 60%, 58%, 56%, 54%, 52%, 50%, 48%, 46%, 44%, 42%, 40%, 38%, 36%, 34%, 32%, 30%, 28%, 26%, 24%, 22%, 20%, 18%, 16%, 14%, 12%, 10%, 8%, 6%, or 4% or so. The transmittance or intensity may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

As illustrated in Figure 11, the geometric phase orientation layer may also be configured to generate a first-order diffracted light ray (D_{1R}) and a negative first-order diffracted light ray (D_{1L}) together with the zero-order transmitted light ray (B_{T}) from the incident light (Bᵢ). In such a case, the beam splitter may generate at least three split beams from the incident beam.

In the above case, the sum of the transmittance or intensity of the zero-order transmitted light ray, the transmittance or intensity of the first-order diffracted light ray, and the transmittance or intensity of the negative first-order diffracted light ray may be adjusted. For example, the lower limit of the sum of the transmittance or intensity may be 80%, 85%, 90%, or 95% or so, and the upper limit thereof may be 100%, 99%, 98%, 97%, 96%, or 95% or so. The sum of the transmittance or intensity may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The average (arithmetic mean) of the transmittance or intensity of the zero-order transmitted light ray, the transmittance or intensity of the first-order diffracted light ray, and the transmittance or intensity of the negative first-order diffracted light ray may be adjusted. For example, the lower limit of the average of the transmittance or intensity may be 0.2%, 0.4%, 0.6%, 0.8%, 1.0%, 1.5%, 2%, 2.5%, 3%, 3.5%, 4%, 4.5%, 5%, 7%, 9%, 11%, 13%, 15%, 17%, 19%, 21%, 23%, 25%, 27%, 29%, 31%, or 33% or so, and the upper limit thereof may be 70%, 68%, 66%, 64%, 62%, 60%, 58%, 56%, 54%, 52%, 50%, 48%, 46%, 44%, 42%, 40%, 38%, 36%, 34%, 32%, 30%, 28%, 26%, 24%, 22%, or 20% or so. The average may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The standard deviation of the transmittance or intensity of the zero-order transmitted light ray (zero-order leakage), the transmittance or intensity of the first-order diffracted light ray (first-order leakage) and the transmittance or intensity of the negative first-order diffracted light ray (negative first-order leakage) may be adjusted. When the transmittance or intensity of the zero-order transmitted light ray (0 order leakage), the transmittance or intensity of the first-order diffracted light ray (first-order leakage), and the transmittance or intensity of the negative first-order diffracted light ray (negative first-order leakage) are set to T₀, T₁, and T₋₁, respectively, and their average is se to T_{avg}, the standard deviation is defined as {[(T_{avg-}T₀)²+(T_{avg-}T₁)²+(T_{avg-}T-₁)²]/3}^{0.5}. The upper limit of the standard deviation may be 50%, 45%, 40%, 35%, 30%, 25%, 20%, 18%, 16%, 14%, 12%, 10%, 8%, 6%, 4%, 2%, 1.5%, 1%, or 0% or so, and the lower limit thereof may be %, 0%, 0.2%, 0.4%, 0.6%, 0.8%, 0.9%, 1%, 1.5%, 2%, 4%, 6%, 8%, 10%, 12%, 14%, 16%, 18%, or 20% or so. The standard deviation may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

Each smaller angle (θ_{L} and θ_{R}) of angles (θ_{R}) formed by the zero-order transmitted light ray (B_{T}) and the first-order diffracted light ray (D_{1R}) and angles formed by the zero-order transmitted light ray (B_{T}) and the negative first-order diffracted light ray (D_{1L}) may be adjusted. The adjustment of these angles may be determined by adjusting the type of the liquid crystal compound applied to the geometric phase orientation layer, the pitch and/or thickness of the orientation layer, and the like. The lower limits of the angles (θ_{R} and θ_{L}) may each independently be 1 degree, 2 degrees, 5 degrees, 7 degrees, 10 degrees, 15 degrees, 20 degrees, 25 degrees, 30 degrees, 35 degrees, 40 degrees, 45 degrees, 50 degrees, or 55 degrees or so, and the upper limits thereof may each independently be 70 degrees, 65 degrees, 60 degrees, 55 degrees, 50 degrees, 45 degrees, 40 degrees, 35 degrees, 30 degrees, 25 degrees, 20 degrees, or 15 degrees or so. The angles (θ_{R} and θ_{L}) may each independently be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The range of the angles is an angle when the incident angle of the incident light is in a direction parallel to the normal of the beam splitter.

The geometric phase orientation layer (e.g., the geometric phase grating orientation layer) included in the beam splitter may also be configured to generate the first-order diffracted light ray (D_{1R}), the negative first-order diffracted light ray (D_{1L}), the second-order diffracted light ray (D_{2R}), and the negative second-order diffracted light ray (D_{2L}) from the incident light (Bi). Such an example is shown in Figure 12. In a case such as the drawing, the geometric phase orientation layer may be configured to generate the zero-order transmitted light ray as well. In this case, the transmittance or intensity of the zero-order transmitted light ray may be within the range of the transmittance or intensity of the zero-order transmitted light ray described in the geometric phase orientation layer as described above. In such a case, the beam splitter may generate at least four or more or five or more split beams from the incident beam.

In such a case, the average (arithmetic mean) of the transmittance or intensity of the first, negative first, second and negative second-order diffracted light rays or, if present, the average (arithmetic mean) of the transmittance or intensity of the first, negative first, second and negative second-order diffracted light rays and the zero-order transmitted light ray may be adjusted. For example, the lower limit of the average of the transmittance or intensity may be 10%, 12%, 14%, 16%, 18%, 20%, 22%, or 24% or so, and the upper limit thereof may be 50%, 48%, 46%, 44%, 42%, 40%, 38%, 36%, 34%, 32%, 30%, 28%, 26%, 24%, 22%, or 20% or so. The average may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

In the above case, the standard deviation of the transmittance or intensity of the first, negative first, second and negative second-order diffracted light rays or, if present, the standard deviation of the transmittance or intensity of the first, negative first, second and negative second-order diffracted light rays and the zero-order transmitted light ray may be adjusted. When the transmittance or intensity of the first, negative first, second and negative second-order diffracted light rays and the transmittance or intensity of the zero-order transmitted light ray are set to T₁, T₋₁, T₂, T₋₂ and T₀, respectively, and the average of the transmittance or intensity of the first, negative first, second and negative second-order diffracted light rays is set to T_{avg1}, and the average of the transmittance or intensity of the first, negative first, second and negative second-order diffracted light rays and the transmittance or intensity of the zero-order transmitted light ray is set to T_{avg2}, the standard deviation of the transmittance or intensity of the first, negative first, second and negative second-order diffracted light rays is defined as {[(T_{avg1-}T₁)²+(T_{avg1-}T-₁)²+(T_{avg1-}T-₂)²+(T_{avg1-}T₂)²]/4}^{0.5}, and the standard deviation of the transmittance or intensity of the first, negative first, second and negative second-order diffracted light rays and the transmittance or intensity of the zero-order transmitted light ray is defined as {[(T_{avg2-}T₁)²+(T_{avg2-}T-₁)²+(T_{avg2-}T-₂)²+(T_{avg2-}T₂)²+(T_{avg2-}T₀)²]/5}^{0.5}. The upper limit of the standard deviation of the transmittance or intensity of the first, negative first, second and negative second-order diffracted light rays or, if present, the standard deviation of the transmittance or intensity of the first, negative first, second and negative second-order diffracted light rays and the zero-order transmitted light ray may be 30, 28, 26, 24, 22, 20, 18, 16, 14, 12, 10, 8, 6, 4, 2, 1.5, 1, or 0 or so, and the lower limit thereof may be 0, 1, 1.5, 2, 4, 6, 8, 10, 12, 14, 16, or 18 or so. The standard deviation may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

In the above case, the smaller angle (θ_{R1}) among the angles formed by the incident light and the first-order diffracted light ray (D_{1R}) and the smaller angle (θ_{L1}) among the angles formed by the incident light and the negative first-order diffracted light ray (D_{1L}) may each be adjusted. The adjustment of these angles may be determined by adjusting the type of the liquid crystal compound applied to the geometric phase orientation layer, the pitch and/or thickness of the orientation layer, and the like. The lower limits of the angles (θ_{R1} and θ_{L1}) may each independently be 1 degree, 3 degrees, 5 degrees, 7 degrees, 9 degrees, 10 degrees, 15 degrees, 20 degrees, 25 degrees, 30 degrees, 35 degrees, 40 degrees, 45 degrees, 50 degrees, or 55 degrees or so, and the upper limits thereof may each independently be 60 degrees, 55 degrees, 50 degrees, 45 degrees, 40 degrees, 35 degrees, 30 degrees, 25 degrees, 20 degrees, or 15 degrees or so. The angles (θ_{R1} and θ_{L1}) may each independently be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The range of angles is an angle when the incident angle of the incident light is in a direction parallel to the normal to the beam splitter.

The smaller angle (θ_{R2}) among the angles formed by the incident light and the second-order diffracted light ray (D_{2R}) and the smaller angle (θ_{L2}) among the angles formed by the incident light and the negative second-order diffracted light ray (D_{2L}) may each be adjusted. The adjustment of these angles may be determined by adjusting the type of liquid crystal compound applied to the geometric phase orientation layer, the pitch and/or thickness of the orientation layer, and the like. The lower limits of the angles (θ_{R2} and θ_{L2}) may each independently be 2 degrees, 4 degrees, 6 degrees, 8 degrees, 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees, or 85 degrees or so, and the upper limits thereof may each independently be 90 degrees, 85 degrees, 80 degrees, 75 degrees, 70 degrees, 65 degrees, 60 degrees, 55 degrees, 50 degrees, 45 degrees, 40 degrees, 35 degrees, 30 degrees, 25 degrees, 20 degrees, or 15 degrees or so. The angles (θ_{R2} and θ_{L2}) may each independently be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The range of the angles is an angle when the incident angle of the incident light is in a direction parallel to the normal of the beam splitter.

The desired beam splitter may be manufactured by configuring and applying a geometric phase orientation layer, for example, a geometric phase grating orientation layer, as above.

In another example, the beam splitter may comprise, as the geometric phase orientation layer, the geometric phase grating orientation layer, wherein the geometric phase grating orientation layer may have a pattern in which the azimuth angle changes in a first direction in the plane and a pattern in which the azimuth angle changes in a second direction forming a predetermined angle with the first direction. In the above case, the geometric phase orientation layer may have two or more azimuth angle change directions. The geometric phase orientation layer may also be configured to generate the zero-order transmitted light ray. In this case, the transmittance or intensity of the zero-order transmitted light ray may be within the range of the transmittance or intensity of the zero-order transmitted light ray as described above.

A smaller angle among the angles formed by the first and second directions in the geometric phase orientation layer may be adjusted. For example, the lower limit of the smaller angle among the angles formed by the first and second directions may be 70 degrees, 72 degrees, 74 degrees, 76 degrees, 78 degrees, 80 degrees, 82 degrees, 84 degrees, 86 degrees, 88 degrees, or 90 degrees or so, and the upper limit thereof may be 180 degrees, 160 degrees, 140 degrees, 120 degrees, 100 degrees, 90 degrees, 88 degrees, 86 degrees, 84 degrees, 82 degrees, or 80 degrees or so. The angle may be within a range of less than or equal to, or less than any upper limit arbitrarily selected from the above-listed upper limits while being more than or equal to, or more than any lower limit arbitrarily selected from the above-listed lower limits.

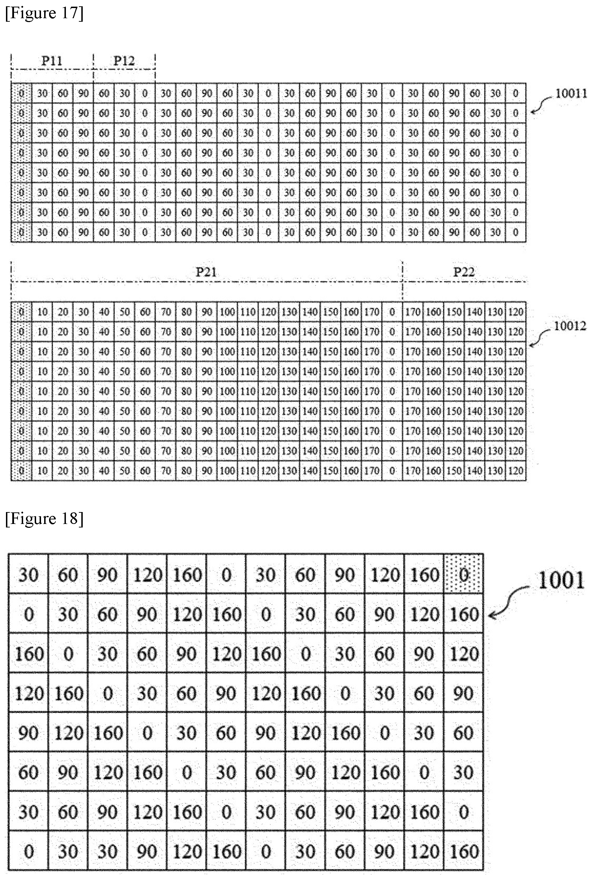

Figure 18 is a view exemplarily showing a form of liquid crystal orientation of a liquid crystal compound in a geometric phase orientation layer with such a form. The change in the orientation direction of an actual liquid crystal compound may be discontinuous or continuous, as shown in Figure 18, but in Figure 18, the orientation directions of the liquid crystal compound at arbitrary specific points are described for the convenience of explanation. That is, for example, the change in the orientation direction in the uppermost row of Figure 18 is described as changing discontinuously at 30 degrees, 60 degrees, 90 degrees, 120 degrees, and 160 degrees in the row direction, but the orientation of the actual liquid crystal compound may change smoothly and continuously from 30 degrees to 160 degrees. After the optical axis direction of the liquid crystal compound located in the square (square filled with dotted lines in the view) at the upper rightmost corner of the geometric phase orientation layer (1001) is assumed to be 0 degrees, the number in each square of Figure 18 represents the angle formed by the optical axis direction of the liquid crystal compound at each point and the optical axis direction of the liquid crystal compound as designated as 0 degrees. In Figure 18, the first direction is one of the horizontal and vertical directions of the view, the second direction is the other of the horizontal and vertical directions of the view, and the angle formed by the first and second directions is approximately vertical.

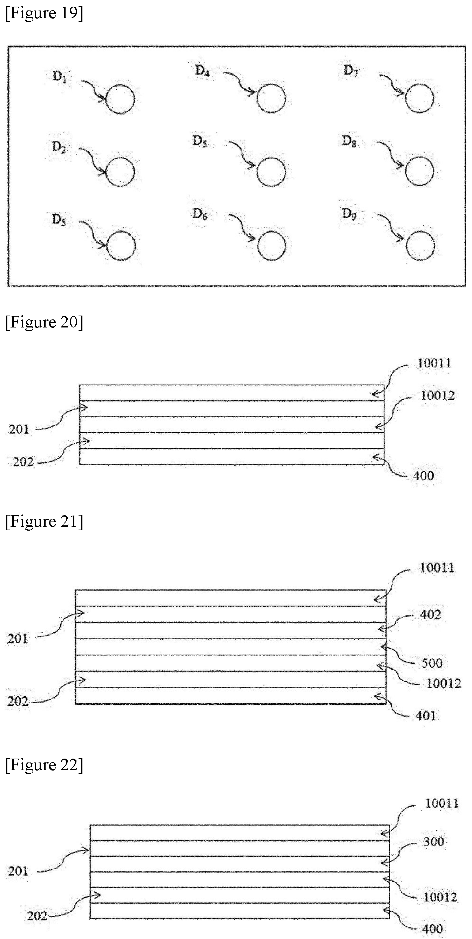

In the case of the traditional geometric phase grating orientation illustrated in Figure 2, there is substantially no azimuth angle change in the arbitrary azimuth angle change direction (Y-axis direction of Figure 2) and the vertical direction (X-axis direction of Figure 2), but the geometric phase orientation layer may be configured so that the azimuth angle change is confirmed in the two directions as above. An advantage of such a geometric phase orientation layer is that four or more split beams may be generated from one incident light even through a single orientation layer. In such a case, the split beams may appear in the form of, for example, the split beams (D₁ to D₉) illustrated in Figure 19. Figure 19 is an example in which split beams in a geometric phase orientation layer (1001) illustrated in, for example, Figure 12 or the like are observed in the plane.

The geometric phase orientation layer may be manufactured so that the pitch identified in the first direction and the pitch identified in the second direction have a predetermined relationship. For example, the geometric phase orientation layer may be configured so that P₁/P₂ of Equation 7 below is in a predetermined range.${P}_{1} {/ P}_{2}$

In Equation 7, P₁ is the pitch of the pattern whose azimuth angle changes in the first direction within the plane, and P₂ is the pitch of the pattern whose azimuth angle changes in the second direction within the plane. The meaning of the pitch is as defined in this specification.

The lower limit of P₁/P₂ in Equation 7 may be 0.1, 0.2, 0.3, 0.4, 0.5, 0.6, 0.7, 0.8, 0.9, or 1.0 or so, and the upper limit thereof may be 2, 1.9, 1.8, 1.7, 1.6, 1.5, 1.4, 1.3, 1.2, 1.1, or 1.0 or so. The P₁/P₂ may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The pitch may be controlled within the above range in consideration of the desired number of split beams and/or the split shape.

The beam splitter may also split one incident beam into multiple split beams. The lower limit of the number of split beams generated by the beam splitter from one incident beam may be 2, 3, 4, 5, 6, 7, 8, or 9 or so, and the upper limit thereof may be 100, 95, 90, 85, 80, 75, 70, 65, 60, 55, 50, 45, 40, 35, 30, 25, 20, 15, 14, 13, 12, 11, 10, or 9 or so. The number of split beams may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

In one example, the beam splitter may comprise two or more geometric phase orientation layers.

For example, the beam splitter may comprise a first geometric phase orientation layer and a second geometric phase orientation layer. The geometric phase orientation layers may be disposed such that light transmitted through one of the first and second geometric phase orientation layers is incident on the other geometric phase orientation layer.

In this specification, among the first and second geometric phase orientation layers, the orientation layer on which the incident beam is incident may be referred to as the first geometric phase orientation layer, and the orientation layer on which the transmitted light ray and/or diffracted light ray transmitted after the incident beam is transmitted through the first geometric phase orientation layer is incident may be referred to as the second geometric phase orientation layer.

At least one, or both two orientation layers of the first and second geometric phase orientation layers may be any one of the above-described geometric phase orientation layers. In another example, at least one, or both two orientation layers of the first and second geometric phase orientation layers may be the above-described geometric phase grating orientation layers.

The transmittance or intensity of the zero-order transmitted light ray of each of the first and/or second geometric phase orientation layers may be within the above-described range.

Figure 13 is an example of a case where the geometric phase orientation layers of Figure 11 are each used as the first and second geometric phase orientation layers (10011, 10012).

In this case, if the incident beam (Bᵢ) is incident on the first geometric phase orientation layer (10011), at least the above-described zero-order transmitted light ray (B_{T1}), first-order diffracted light ray (D_{1R}), and negative first-order diffracted light ray (D_{1L}) may be generated. Subsequently, the generated zero-order transmitted light ray (B_{T1}), first-order diffracted light ray (D_{1R}), and negative first-order diffracted light ray (D_{1L}) are each incident on the second geometric phase orientation layer (10012). In this way, the zero-order transmitted light ray (B_{T1}), the first-order diffracted light ray (D_{1R}) and the negative first-order diffracted light ray (D_{1L}) incident on the second geometric phase orientation layer

(10012) may generate at least three zero-order transmitted light rays (B_{T21}, B_{T22}, B_{T23}), first-order diffracted light rays (D_{1R1}, D_{1R2}, D_{1R3}), and negative first-order diffracted light rays (D_{1L1}, D_{1L2}, D_{1L3}), respectively. Therefore, with the above arrangement, one incident beam (Bi) may generate at least nine split beams (B_{T21}, B_{T22}, B_{T23}, D_{1R1}, D_{1R2}, D_{1R3}, D_{1L1}, D_{1L2}, D_{1L3}).

To generate at least nine split beams as above, each pitch of the first and second geometric phase orientation layers may be adjusted. As described above, the diffraction angle in the geometric phase orientation layer may vary depending on the pitch. To generate at least nine split beams in the form of Figure 13, the pitches of the first and second geometric phase orientation layers may be adjusted so that at least some of the nine split beams (B_{T21}, B_{T22}, B_{T23}, D_{1R1}, D_{1R2}, D_{1R3}, D_{1L1}, D_{1L2}, D_{1L3}) do not overlap.

Therefore, in one example, the pitch of the first geometric phase orientation layer and the pitch of the second geometric phase orientation layer may be different from each other.

For example, the pitches of the first and second geometric phase orientation layers may be adjusted so that P₂/P₁ is within a predetermined range.

The P₁ is a pitch of one of the first and second geometric phase orientation layers, and P₂ is a pitch of the other of the first and second geometric phase orientation layers.

In one example, the P₁ may be a pitch of the first geometric phase orientation layer (orientation layer on which the incident beam is incident), and P₂ may be a pitch of the second geometric phase orientation layer (orientation layer on which the transmitted light ray and/or diffracted light ray transmitted through the first geometric phase orientation layer is incident).

The lower limit of the P₂/P₁ may be 0.1, 0.3, 0.5, 0.7, 1, 1.5, 1.6, 1.7, 1.8, 1.9, 2, 2.1, 2.2, 2.3, 2.4, 2.5, 2.6, 2.7, 2.9, or 3.0 or so, and the upper limit thereof may be 10, 9, 8, 7, 6, 5, 4.9, 4.8, 4.7, 4.6, 4.5, 4.4, 4.3, 4.2, 4.1, 4.0, 3.9, 3.8, 3.7, 3.6, 3.5, 3.4, 3.3, 3.2, 3.1, 3.0, 2.8, 2.6, 2.4, 2.2, 2.0, 1.8, 1.6, 1.4, 1.2, 1.0, 0.8, 0.6, or 0.4 or so. The P₂/P₁ may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The pitch may be controlled within the range considering the desired number of split beams.

In the case, the first and second geometric phase orientation layers may be disposed such that a smaller pitch (e.g., P₁) exists within a larger pitch (e.g., P₂) among the pitches of the first and second geometric phase orientation layers.

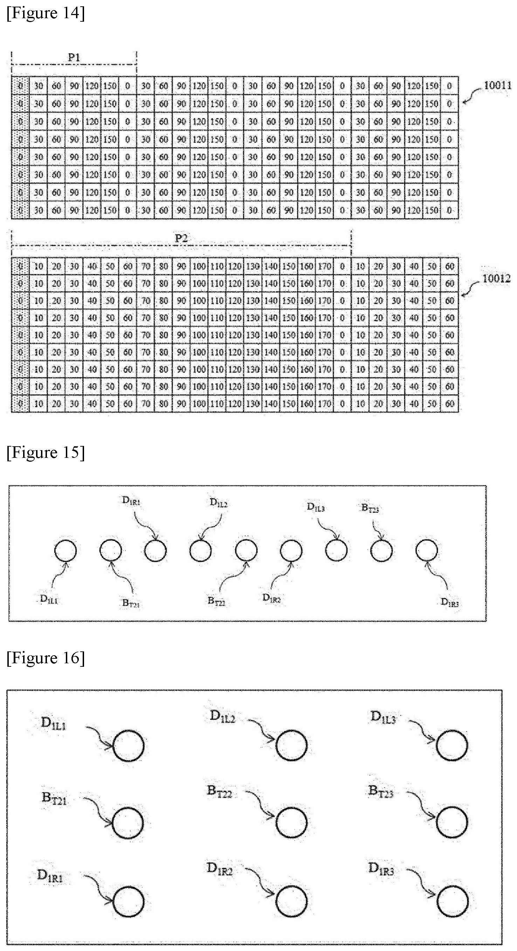

Figure 14 is a view exemplarily showing pitches of first and second geometric phase orientation layers with such a type. In Figure 14, the optical axis direction of the liquid crystal compound located in the leftmost square (square filled with dotted lines in the view) of the first geometric phase orientation layer (10011) is assumed to be 0 degrees, and the number in each square represents the angle formed by the optical axis direction of the liquid crystal compound existing along the azimuth angle change direction (horizontal direction in Figure 14) and the optical axis direction of the liquid crystal compound as designated as 0 degrees. The change in the orientation direction of the actual liquid crystal compound may change continuously, without changing intermittently as shown in Figure 14, but in Figure 14, the orientation direction of the liquid crystal compound at an arbitrary specific point is described for the convenience of explanation. That is, for example, although the orientation direction of the liquid crystal compound in the pitch P₁ of Figure 14 is described as changing intermittently from 0 degrees, 30 degrees, 60 degrees, 90 degrees, 120 degrees, 150 degrees, and 0 degrees, the orientation of the actual liquid crystal compound mostly changes smoothly and continuously from the leftmost 0-degree direction within P₁ to the rightmost 0-degree direction. Figure 14 is a case where the P₂/P₁ is about 2.7 or so. Through the view, it can be known that the pitch (P₁) of the first geometric phase orientation layer (10011) exists within the pitch (P₂) of the second geometric phase orientation layer (10012).

In the beam splitter comprising the first and second geometric phase orientation layers disclosed in the present specification, the smaller angle among the angles formed by the azimuth angle change direction in the first geometric phase orientation layer and the azimuth angle change direction in the second geometric phase orientation layer may be adjusted. As described above, the azimuth angle change direction in this specification is an arbitrary direction where the pitch is completed by the azimuth angle change of the liquid crystal compound. Such an azimuth angle change direction may exist in one direction in one geometric phase orientation layer, or may exist in two or more directions. For example, this direction is one direction in the horizontal direction in Figure 14. In addition, in the example of the geometric phase grating orientation layer of Figure 2, the azimuth angle change direction is the Y-axis direction. In the example of Figure 2, the constant azimuth angle is maintained without any azimuth angle change in the X-axis direction, and therefore, the X-axis direction is not an azimuth angle change direction.

In the example of Figure 3, the azimuth angle change direction exists radially in multiple directions.

In the case where the azimuth angle change directions of the first and/or second geometric phase orientation layers are two or more multiple directions, upon confirming the angle formed by the azimuth angle change directions, any azimuth angle change direction of the first and/or second geometric phase orientation layers may be selected.

In the beam splitter comprising the first and second geometric phase orientation layers, the lower limit of the smaller angle among angles formed by the azimuth angle change direction in the first geometric phase orientation layer and the azimuth angle change direction in the second geometric phase orientation layer may be 0 degrees, 5 degrees, 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees, or 85 degrees or so, and the upper limit thereof may be 170 degrees, 160 degrees, 150 degrees, 140 degrees, 130 degrees, 120 degrees, 110 degrees, 100 degrees, 90 degrees, 85 degrees, 80 degrees, 75 degrees, 70 degrees, 65 degrees, 60 degrees, 55 degrees, 50 degrees, 45 degrees, 40 degrees, 35 degrees, 30 degrees, 25 degrees, 20 degrees, 15 degrees, 10 degrees, or 5 degrees or so. The angle may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

In the beam splitter comprising the first and second geometric phase orientation layers, the smaller angle among the angles formed by the azimuth angle change direction in the first geometric phase orientation layer and the azimuth angle change direction in the second geometric phase orientation layer may be confirmed through the shape of the split beam to be generated.

For example, when the pitch shape of each of the first and second geometric phase orientation layers (10011, 10012) illustrated in Figure 13 is the shape illustrated in Figure 14, and the azimuth angle change direction in the first geometric phase orientation layer and the azimuth angle change direction in the second geometric phase orientation layer are approximately parallel, the nine split beams illustrated in Figure 13 may be confirmed in the same shape as in Figure 15 upon plane observation.

For example, when the pitch shape of each of the first and second geometric phase orientation layers (10011, 10012) illustrated in Figure 13 is the shape illustrated in Figure 14, and the azimuth angle change direction in the first geometric phase orientation layer and the azimuth angle change direction in the second geometric phase orientation layer are approximately perpendicular, the nine split beams illustrated in Figure 13 may be confirmed in the same shape as in Figure 16 upon plane observation.

In this way, the azimuth angle change direction may be adjusted considering the desired arrangement of split beams.

The beam splitter may also split one incident beam into multiple split beams. The lower limit of the number of split beams generated by the beam splitter from one incident beam may be 2, 3, 4, 5, 6, 7, 8, or 9 or so, and the upper limit thereof may be 100, 95, 90, 85, 80, 75, 70, 65, 60, 55, 50, 45, 40, 35, 30, 25, 20, 15, 14, 13, 12, 11, 10, or 9 or so. The number of the split beams may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The multiple split beams generated by the beam splitter may comprise one or more beams selected from the group consisting of unpolarized beams; linearly polarized beams; and circularly polarized beams and elliptically polarized beams.

In the beam splitter with the above-described type, at least some of the multiple split beams may be circularly polarized beams or elliptically polarized beams. For example, the lower limit of the ratio of circularly polarized beams or elliptically polarized beams among the multiple split beams split by the beam splitter with the type may be 30%, 35%, 40%, 45%, 50%, 55%, 60%, or 65% or so, and the upper limit thereof may be 100%, 95%, 90%, 85%, 80%, 75%, 70%, or 65% or so. The ratio may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The beam splitter of another aspect disclosed in the present specification may comprise a first geometric phase orientation layer and a second geometric phase orientation layer. The geometric phase orientation layers may be disposed such that the light transmitted through one of the first and second geometric phase orientation layers is incident on the other geometric phase orientation layer.

In the present specification, among the first and second geometric phase orientation layers, an orientation layer on which an incident beam is incident may be referred to as a first geometric phase orientation layer, and an orientation layer on which the transmitted light ray and/or diffracted light ray transmitted after the incident beam is transmitted through the first geometric phase orientation layer is incident may be referred to as a second geometric phase orientation layer.

In the beam splitter, either one of the first and second geometric phase orientation layers may have the above-described bidirectional pitch, or both the first and second geometric phase orientation layers may have the above-described bidirectional pitch.

At least one or both two orientation layers of the first and second geometric phase orientation layers may be the above-described geometric phase orientation layers. At least one or both two orientation layers of the first and second geometric phase orientation layers may be the above-described geometric phase grating orientation layers.

When the first and/or second geometric phase orientation layer is the above-described geometric phase orientation layer, the transmittance or intensity of the zero-order transmitted light ray of the first and/or second geometric phase orientation layer may be within the above-described range.

As described above, the bidirectional pitch is a pattern in which the rotation direction of the azimuth angle change of the geometric phase orientation layer changes at least once or more along the azimuth angle change direction, and such a pattern includes a 90-degree bidirectional pitch pattern in which the rotation direction changes within one pitch, as illustrated in Figure 5, and a 180-degree bidirectional pitch pattern in which the rotation direction changes between one pitch and another pitch, as illustrated in Figure 6.

In one example of the above aspect, one (e.g., the first geometric phase orientation layer) of the first and second geometric phase orientation layers may have a 90-degree bidirectional pitch, and the other (e.g., the second geometric phase orientation layer) of the first and second geometric phase orientation layers may have a 180-degree bidirectional pitch.

In another example, both the first and second geometric phase orientation layers may have a 90-degree bidirectional pitch, or a 180-degree bidirectional pitch.

Figure 17 is an example of a first geometric phase orientation layer (10011) and a second geometric phase orientation layer (10012), having a bidirectional pitch in the shape as above. The meaning of each number described in the squares in Figure 17 is the same as in Figure 14. In this case, the change in the orientation direction of the actual liquid crystal compound may, in some cases, change continuously without changing intermittently as shown in Figure 17, but in Figure 17, the orientation direction of the liquid crystal compound at a specific point is described for the convenience of explanation. For example, the orientation direction of the liquid crystal compound within the pitch P11 of Figure 17 is described as changing intermittently from 0 degrees, 30 degrees, 60 degrees, and 90 degrees, but the orientation of the actual liquid crystal compound mostly changes smoothly and continuously from 0 degrees to 90 degrees.

Referring to Figure 17, it can be known that in the case of the first geometric phase orientation layer (10011), it is a 90-degree bidirectional pitch in which there are two regions (P11 and P12) with different rotation directions within one pitch (P11+P12), and in the case of the second geometric phase orientation layer (10012), after one pitch P21 is completed, another pitch P22 is completed in a rotation direction different from the pitch P21.

In the beam splitter with such a type, the split of the incident beam may be shown in the form as exemplified in, for example, Figure 15 or 16.

However, if the bidirectional pitch of the above type is applied, the zero-order transmitted light ray, the first-order diffracted light ray, and the negative first-order diffracted light ray to be split by the geometric phase orientation layer (10011, 10012) may be obtained in a substantially unpolarized state. Therefore, in this case, at least nine split beams (B_{T21}, B_{T22}, B_{T23}, D_{1R1}, D_{1R2}, D_{1R3}, D_{1L1}, D_{1L2}, D_{1L3}) obtained from one incident beam (Bi) may be obtained mostly in the unpolarized state.

To generate at least nine split beams, each pitch of the first and second geometric phase orientation layers may also be adjusted in the above aspect. For example, by adjusting each the pitches of the first and second geometric phase orientation layers, at least nine split beams (B_{T21}, B_{T22}, B_{T23}, D_{1R1}, D_{1R2}, D_{1R3}, D_{1L1}, D_{1L2}, D_{1L3}) may be obtained, as illustrated in Figure 13.

In one example, the pitch of the first geometric phase orientation layer and the pitch of the second geometric phase orientation layer in the above aspect may also be different from each other.

For example, in the above aspect, the pitches of the first and second geometric phase orientation layers may be adjusted so that P₂/P₁ (the P₁ is the pitch of one of the first and second geometric phase orientation layers, and the P₂ is the pitch of the other of the first and second geometric phase orientation layers) is within a predetermined range.

In one example, the P₁ may be the pitch of the first geometric phase orientation layer (the orientation layer onto which the incident beam is incident), and the P₂ may be the pitch of the second geometric phase orientation layer (the orientation layer onto which the transmitted light ray and/or the diffracted light ray transmitted through the first geometric phase orientation layer is incident).

The lower limit of the P₂/P₁ may be 1.5, 1.6, 1.7, 1.8, 1.9, 2, 2.1, 2.2, 2.3, 2.4, 2.5, 2.6, 2.7, 2.9, or 3.0 or so, and the upper limit thereof may be 5, 4.9, 4.8, 4.7, 4.6, 4.5, 4.4, 4.3, 4.2, 4.1, 4.0, 3.9, 3.8, 3.7, 3.6, 3.5, 3.4, 3.3, 3.2, 3.1, or 3.0 or so. The P₂/P₁ may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The pitch may be controlled within the range considering the desired number of split beams.

The first and second geometric phase orientation layers may be disposed so that the smaller pitch (e.g., P₁) exists within the larger pitch (e.g., P₂) among the pitches of the first and second geometric phase orientation layers.

Figure 17 exemplarily shows pitches of first and second geometric phase orientation layers with such a type. Figure 16 is the case where the P₂/P₁ is about 2.7. Through the view, it can be known that the pitch (P11+P12) of the first geometric phase orientation layer (10011) exists within the pitch (P21 or P22) of the second geometric phase orientation layer (10012).

In the beam splitter of the above aspect comprising the first and second geometric phase orientation layers, the smaller angle among the angles formed by the azimuth angle change direction in the first geometric phase orientation layer and the azimuth angle change direction in the second geometric phase orientation layer may be adjusted. The reason for adjusting such an angle is as described above with reference to Figures 15 and 16.

In the beam splitter comprising the first and second geometric phase orientation layers, the lower limit of the smaller angle among the angles formed by the azimuth angle change direction in the first geometric phase orientation layer and the azimuth angle change direction in the second geometric phase orientation layer may be 0 degrees, 5 degrees, 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees, or 85 degrees or so, and the upper limit thereof may be 170 degrees, 160 degrees, 150 degrees, 140 degrees, 130 degrees, 120 degrees, 110 degrees, 100 degrees, 90 degrees, 85 degrees, 80 degrees, 75 degrees, 70 degrees, 65 degrees, 60 degrees, 55 degrees, 50 degrees, 45 degrees, 40 degrees, 35 degrees, 30 degrees, 25 degrees, 20 degrees, 15 degrees, 10 degrees, or 5 degrees or so. The angle may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

As described above, the azimuth angle change direction may be adjusted considering the desired arrangement of split beams.

The beam splitter in the above type may also split one incident beam into multiple split beams. The lower limit of the number of split beams generated from one incident beam by the beam splitter may be 2, 3, 4, 5, 6, 7, 8, or 9 or so, and the upper limit thereof may be 100, 95, 90, 85, 80, 75, 70, 65, 60, 55, 50, 45, 40, 35, 30, 25, 20, 15, 14, 13, 12, 11, 10, or 9 or so. The number of split beams may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

The multiple split beams generated by the beam splitter may comprise one or more beams selected from the group consisting of unpolarized beams; linearly polarized beams; and circularly polarized beams and elliptically polarized beams.

In the beam splitter in the above-described type, at least some of the multiple split beams may be unpolarized beams. For example, the lower limit of the ratio of unpolarized beams among the multiple split beams split by the beam splitter in the above type may be 30%, 35%, 40%, 45%, 50%, 55%, 60%, 65%, 70%, 75%, 80%, 85%, 90%, or 95% or so, and the upper limit thereof may be 100%, 95%, 90%, 85%, 80%, 75%, 70%, or 65% or so. The ratio may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

In the various types of beam splitters as described above, the thickness of each of the geometric phase orientation layers may be adjusted in consideration of the purpose. For example, each of the geometric phase orientation layers may satisfy Equation 4 above, or may be determined in a range that the ratio of Δn×T to λ/2 in Equation 4, i.e., (2×Δn×T)/λ, may satisfy the above-described range, in consideration of the refractive index anisotropy of the liquid crystal compound forming the orientation layer. For example, the thickness of the geometric phase orientation layer may be within a range of about 0.1 to 50 µm, but is not limited thereto.

Specific examples of the beam splitter disclosed in the present specification may be configured in various forms in addition to the above-described contents.

The beam splitter may comprise additional elements as required in addition to one, or two or more geometric phase orientation layers as described above. For example, when the beam splitter comprises the first and second geometric phase orientation layers, the beam splitter may further comprise a retardation film between the first and second geometric phase orientation layers.

The retardation film may be introduced, for example, to adjust the polarization state of the first-order and/or negative first-order diffracted light ray, and the like, among the light transmitted through the first geometric phase orientation layer. As described above, the geometric phase orientation layer, such as the geometric phase grating orientation layer, may generate at least the zero-order transmitted light ray, the first-order diffracted light ray, and the negative first-order diffracted light ray, if unpolarized light is incident thereon, where depending on the configuration of the orientation layers, optically, among the light, the zero-order transmitted light ray may be transmitted through the geometric phase orientation layer in the form of unpolarized light, and one of the first-order and negative first-order diffracted light rays may be transmitted through the geometric phase orientation layer as right-circularly polarized light, and the other may be transmitted through the geometric phase orientation layer as left-circularly polarized light.

The geometric phase orientation layer, for example, the geometric phase grating orientation layer, has a characteristic of diffracting circularly polarized light (or elliptically polarized light) at one diffraction angle. Therefore, in some cases, there is a possibility that among the zero-order transmitted light ray, first-order diffracted light ray, and negative first-order diffracted light ray transmitted through the first geometric phase orientation layer, the first-order and negative first-order diffracted light rays are not be split, or are split with low efficiency, while being transmitted through the second geometric phase orientation layer, in the case of a left- or right-circular polarization state. Therefore, in such cases, the polarization state of the first-order and negative first-order diffracted light rays may also be changed to a polarization state (e.g., unpolarized light or linearly polarized light) capable of effectively being split by the second geometric phase orientation layer through the retardation film.

The specific type of the retardation film is not particularly limited if it is selected so that such a function can be performed. For example, the retardation film is a retardation film capable of generating linearly polarized light from circularly polarized light (or elliptically polarized light), whereby a so-called QWP (Quarter Wave Plate) or the like may be used. Various liquid crystal films and polymer stretched films, and the like, capable of operating as the QWP are known in the industry.

Here, the QWP may be selected to exhibit a wavelength delay of λ/4 of the wavelength of light to be split by the beam splitter.

For example, if the wavelength of light to be split by the beam splitter is λ, the in-plane phase difference of the QWP may be within a range of about (λ/4-20) nm to (λ/4+20) nm.

For example, if the wavelength of light to be split by the beam splitter is about 940 nm or so, the in-plane phase difference of the QWP may be within a range of about 210 nm to 250 nm based on 940 nm. At this time, the in-plane phase difference is a value d×(nx-ny) obtained by multiplying the value obtained by subtracting the refractive index ny in the fast axis direction from the refractive index nx in the slow axis direction of the QWP by the thickness d of the QWP.

Here, the angle formed by the slow axis direction of the QWP and the azimuth angle change direction of the geometric phase orientation layer may be adjusted. For example, when the QWP is present between two geometric phase orientation layers, the lower limit of the angle between the slow axis direction of the QWP and the azimuth angle change direction of one of the two geometric phase orientation layers or the angle between the slow axis direction of the QWP and the azimuth angle change directions of both the two geometric phase orientation layers may be 0 degrees, 20 degrees, 40 degrees, 60 degrees, 80 degrees, 85 degrees, or 90 degrees or so, and the upper limit thereof may be 180 degrees, 160 degrees, 140 degrees, 120 degrees, 100 degrees, 95 degrees, or 90 degrees or so. The angle may be within a range of less than or equal to, or less than any upper limit arbitrarily selected from the above-listed upper limits while being more than or equal to, or more than any lower limit arbitrarily selected from the above-listed lower limits.

Under such an arrangement, it is possible to secure the desired characteristics of beam splitter.

The beam splitter may further comprise one or more anti-reflection layers (AR layers) at appropriate locations in consideration of an appropriate separation efficiency.

As described above, the geometric phase orientation layer or geometric phase grating orientation layer included in the beam splitter may comprise an oriented liquid crystal compound (a geometric phase-oriented liquid crystal compound). In this case, the beam splitter may further comprise an alignment film regulating the orientation of the liquid crystal compound.

Here, the type of the alignment film capable of regulating the geometric phase orientation is not particularly limited. Various types of alignment films capable of implementing geometric phase grating or geometric phase lens orientation are known in the industry. For example, the alignment film may also be formed through laser pattern exposure performed by superimposing straight light and diffused light as the method disclosed in the literature (Optics Express Vol. 27, Issue 3, pp. 2632-2642 (2019)), and the alignment film formed by a so-called nanoimprinting method may also be applied.

The beam splitter may also further comprise a base film (inorganic or organic base film) for maintaining the geometric phase orientation layer or the alignment film, and an adherent layer (adhesive layer or pressure-sensitive adhesive layer) for attaching a plurality of layers constituting the beam splitter.

Figures 20 to 23 are exemplary laminated structures of beam splitters comprising elements selected from the group consisting of the first and second geometric phase orientation layers (10011, 10012), the retardation film (300), the alignment film (201, 202), the adherent layer (500), and the base film (401, 402, 400). The beam splitter may also have various structures in addition to the structures illustrated in Figures 20 to 23, and one or more of the constitutions illustrated in Figures 20 to 23 may be omitted or the lamination order may be changed if it functions as the beam splitter.

The present specification also discloses a dot projector comprising the beam splitter as described above. The dot projector may comprise a beam splitter of any one of the above-described various aspects and a light source. In this instance, the light source may be present so that at least the beam splitter may be irradiated with light. The wavelength of the light irradiated by the light source may be adjusted according to the intended use of the beam splitter or dot projector.

For example, the lower limit of the wavelength of the irradiated light of the light source may be 700 nm, 750 nm, 800 nm, 850 nm, 900 nm, 910 nm, 920 nm, 930 nm, or 940 nm or so, and the upper limit thereof may be 2,000 nm, 1,500 nm, 1,000 nm, or 950 nm or so. The wavelength may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The present specification also discloses a device comprising the beam splitter or dot projector. Such a device may be, for example, a sensing device, and specifically a sensing device for 3D mapping. Specific examples of such a sensing device may be exemplified by a recognition device, but is not limited thereto.

The method of implementing the sensing device or facial recognition device, or the specific type of other constitutions except for the beam splitter or dot projector are not particularly limited. If the beam splitter or dot projector disclosed in the present specification is used, the device can be implemented in various known ways.

### Advantageous Effects

The present specification is intended to disclose a beam splitter and a use thereof. The beam splitter can split a beam from a light source into multiple beams having desired shapes and intensities, and such a beam splitter can be implemented with simple constitutions and processes. The beam splitter can be applied to, for example, constituting facial recognition devices or various sensing devices, and the like for 3D mapping.

### Description of Drawings

Figure 1 is a schematic diagram of an exemplary beam splitter.
Figure 2 is a schematic diagram of geometric phase grating orientation, which is an example of geometric phase orientation.
Figure 3 is a schematic diagram of geometric phase lens orientation, which is an example of geometric phase orientation.
Figure 4 is a schematic diagram for explaining a normal pitch.
Figures 5 and 6 are schematic diagrams for explaining a bidirectional pitch.
Figure 7 is a diagram for explaining a rotation direction.
Figure 8 is a diagram for explaining a pitch of geometric phase grating orientation.
Figure 9 is a diagram for explaining a pitch of geometric phase lens orientation.
Figure 10 is a diagram for explaining action of a conventional geometric phase grating orientation layer.
Figures 11 and 12 are diagrams for explaining an exemplary geometric phase orientation layer disclosed in the present specification.
Figure 13 is a diagram for explaining action of exemplary first and second geometric phase orientation layers disclosed in the present specification.
Figure 14 is a view for explaining pitch forms of exemplary first and second geometric phase orientation layers disclosed in the present specification.
Figures 15 and 16 are diagrams for explaining shapes of split beams split by an exemplary beam splitter disclosed in the present specification.
Figure 17 is a view for explaining pitch forms of exemplary first and second geometric phase orientation layers disclosed in the present specification.
Figure 18 is a view for explaining a pitch form of an exemplary geometric phase orientation layer disclosed in the present specification.
Figure 19 is a diagram for explaining shapes of split beams split by an exemplary beam splitter disclosed in the present specification.
Figures 20 to 23 are diagrams for explaining lamination forms of exemplary beam splitters disclosed in the present specification.
Figure 24 is a view showing a shape of light split by a beam splitter of Example 1.
Figure 25 is a view showing a shape of light split by a beam splitter of Example 2.
Figure 26 is a view showing a shape of light split by a beam splitter of Example 3.
Figure 27 is a view showing a shape of light split by a beam splitter of Example 4.
Figure 28 is a view showing a shape of light split by a beam splitter of Example 5.
Figure 29 is a view showing a shape of light split by a beam splitter of Example 6.
Figure 30 is a view showing a shape of light split by a beam splitter of Example 7.
Figure 31 is a view showing a shape of light split by a beam splitter of Example 8.
Figure 32 is a view showing a shape of light split by a beam splitter of Example 9.
Figure 33 is one example of an alignment film for forming a geometric phase orientation layer.

### Mode for Invention

Hereinafter, the beam splitter will be specifically described through examples, but the scope of the beam splitter is not limited by the following transmittance variable device.

### Example 1.

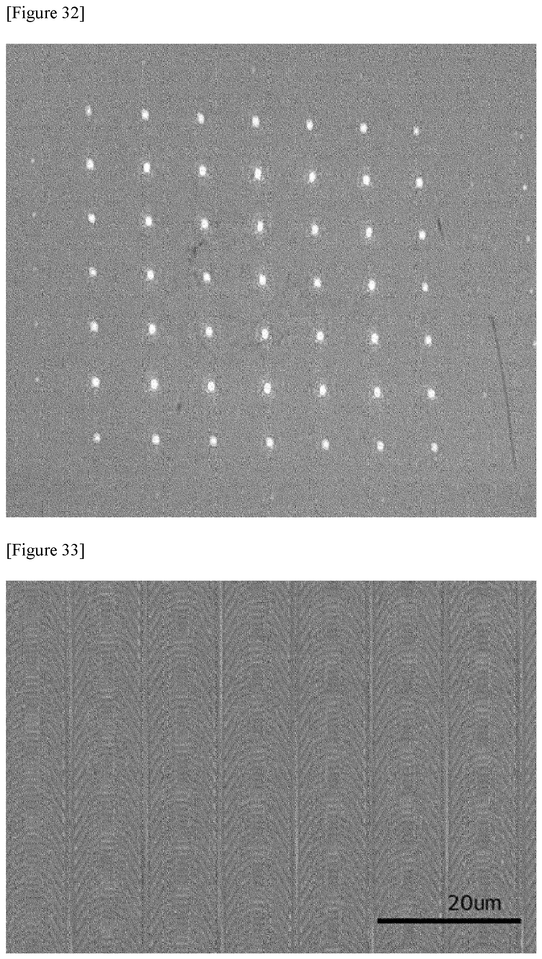

An alignment film was formed on an isotropic alkali-free glass substrate (thickness: about 0.7 mm) by a nanoimprinting method. The alignment film was formed so that a liquid crystal compound formed geometric phase grating orientation with a pitch of about 9.8 µm or so as the geometric phase grating orientation as shown in Figure 2. Figure 33 is an image of the formed alignment film (nanoimprinting grating).

A coating liquid comprising a nematic liquid crystal compound (RM: Reactive Mesogen) was applied on the alignment film, and maintained at about 70°C for 2 minutes or so, and then subjected to cooling (about 40°C) to orient the liquid crystal compound, and then a beam splitter was manufactured by irradiating it with ultraviolet rays at a light quantity of about 400 mJ/cm² using a Fusion UV system under a nitrogen atmosphere to form a liquid crystal layer (geometric phase grating) with a thickness of about 2.6 µm or so. As the nematic liquid crystal compound, a liquid crystal compound (Merck, RMS03-013C) with a refractive index anisotropy (based on a wavelength of 550 nm) Δn of about 0.12 or so was used. As a light source for a wavelength of 940 nm to confirm the characteristics of the beam splitter, Newport's LQC940-90E was used. Using the light source, light (Bi) at a wavelength of 940 nm was incident on the beam splitter (1000), as illustrated in Figure 1.

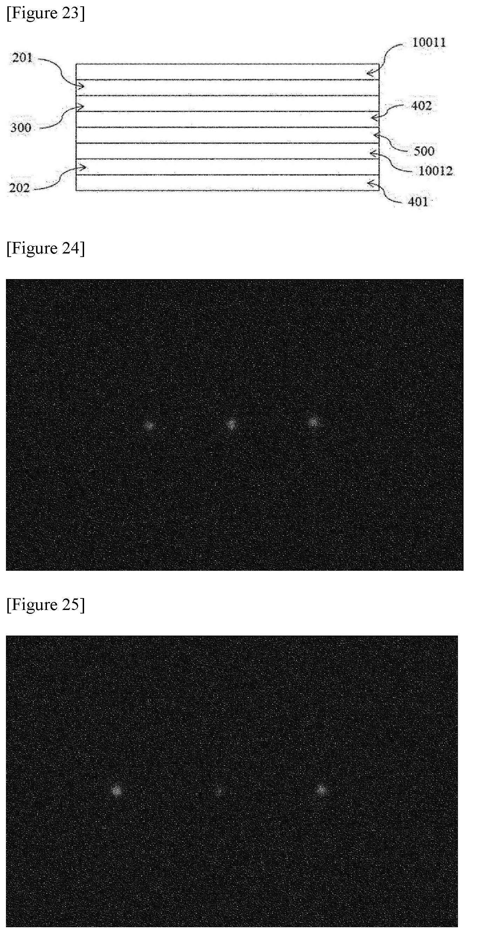

Figure 24 is an image showing that the incident light is split into three light rays. The image was captured with THORLAB's DCC1645C-HQ (USB2.0 CMOS Camera, 1208×1024). The equipment does not include an IR cut filter, so that it can detect light with a wavelength of 940 nm.

Through the view, it can be confirmed that the desired light splitting effect can be obtained through the beam splitter.

Referring to Figure 1, the three light rays in the view correspond to the negative first-order diffracted light ray (Bₒ₃), the zero-order transmitted light ray (Bₒ₂), and the first-order diffracted light ray (Bₒ₁) from the left, respectively.

As a result of the measurement, the intensity of the negative first-order diffracted light ray (Bₒ₃) was about 34%, the intensity of the zero-order transmitted light ray (Bₒ₂) was about 32%, and the intensity of the first-order diffracted light ray (Bₒ₁) was about 34%. The intensity was measured using a silicon detector of 918-UV-0D3R (manufactured by Newport) and a power meter of Model 1918-R (manufactured by Newport).

### Example 2.

A beam splitter was manufactured in the same manner as in Example 1, except that the thickness of the liquid crystal layer was adjusted to about 3.8 µm or so.

Figure 25 is a result of confirming three split light rays in the same manner as in Example 1 for the beam splitter. Referring to Figure 1, the three light rays in the view correspond to the negative first-order diffracted light ray (Bₒ₃), the zero-order transmitted light ray (Bₒ₂), and the first-order diffracted light ray (Bₒ₁) from the left, respectively. As a result of the measurement, the intensity of the negative first-order diffracted light ray (Bₒ₃) was about 48%, the intensity of the zero-order transmitted light ray (Bₒ₂) was about 4%, and the intensity of the first-order diffracted light ray (Bₒ₁) was about 48%. From these results, it can be confirmed that the intensity of the split light can be adjusted by adjusting the thickness of the liquid crystal layer.

### Example 3.

Two geometric phase orientation layers were manufactured in the same manner as in Example 1. One orientation layer (first orientation layer) was manufactured so that the pitch was about 9.8 µm or so and the thickness of the liquid crystal layer was about 2.7 µm or so, and the other orientation layer (second orientation layer) was manufactured so that the pitch was about 3.24 µm or so and the thickness was about 2.7 µm or so. The same liquid crystal compound as in Example 1 was used for manufacturing the orientation layer.

Subsequently, a retardation film having an in-plane phase difference of about 235 nm or so for a wavelength of 940 nm was prepared as a QWP. The first orientation layer, the QWP, and the second orientation layer were sequentially laminated to manufacture a beam splitter. Here, the azimuth angle change directions of the first and second orientation layers were approximately horizontal to each other, and the slow axis direction of the QWP was perpendicular to the azimuth angle change directions of the first and second orientation layers.

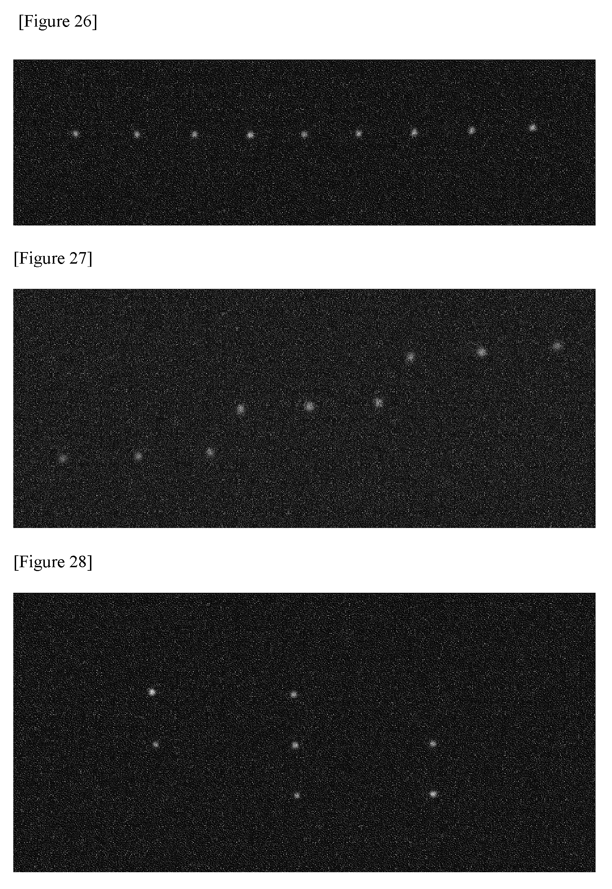

Figure 26 is a result of confirming split light in the same manner as in Example 1 for the beam splitter. At this time, the incident light was incident toward the first orientation layer among the first and second orientation layers. From the view, it can be confirmed that multiple split light rays can be obtained through the beam splitter.

### Example 4.

A beam splitter was manufactured in the same manner as in Example 3, except that the angle formed by the azimuth angle change direction of the first orientation layer and the azimuth angle change direction of the second orientation layer was set to about 10 degrees or so, and the angle formed by the slow axis of the QWP and the azimuth angle change direction of the first orientation layer was set to about 90 degrees.

Figure 27 is a result of confirming split light in the same manner as in Example 1 for the beam splitter. At this time, the incident light was incident toward the first orientation layer among the first and second orientation layers. From the view, it can be confirmed that the arrangement of the split light rays can be adjusted through the angle adjustment of the two beam splitters.

### Example 5.

A beam splitter was manufactured in the same manner as Example 3, except that the angle formed by the azimuth angle change direction of the first orientation layer and the azimuth angle change direction of the second orientation layer was approximately 90 degrees or so and that QWP was not used.

Figure 28 is a result of confirming split light in the same manner as Example 1 for the beam splitter. At this time, the incident light was incident toward the first orientation layer among the first and second orientation layers. From the view, it can be confirmed that multiple split light rays can be obtained even without QWP. However, since the application of QWP can generate more split light rays, the use of QWP can be adjusted depending on the purpose.

### Example 6.

A beam splitter was manufactured in the same manner as Example 5, except that a QWP was introduced between the first orientation layer and the second orientation layer, but the slow axis direction of the QWP was made approximately 90 degrees to the azimuth angle change direction of the first orientation layer.

Figure 28 is a result of confirming split light in the same manner as in Example 1 for the beam splitter. At this time, the incident light was incident toward the first orientation layer among the first and second orientation layers. From the view, it can be confirmed that multiple split light rays can be obtained even without QWP. However, since the application of QWP can generate more split light rays, the use of QWP can be adjusted depending on the purpose.

### Example 7.

As in Figure 6, the orientation layer was formed to have a 180-degree bidirectional pitch. That is, as in Figure 6, the orientation layer was formed so that a pattern was repeated, in which a liquid crystal LC2 existed by rotating 180 degrees clockwise based on one liquid crystal LC1, and a liquid crystal LC3 existed by rotating 180 degrees counterclockwise from the liquid crystal LC2. At this time, the distance from the liquid crystal LC1 to the liquid crystal LC2 was about 15 µm or so, and the distance from the liquid crystal LC2 to the liquid crystal LC3 was also about 15 µm or so.

The liquid crystal layer was formed with a thickness of about 2.8 µm or so, and the same liquid crystal compound as in Example 1 was used as the liquid crystal compound.

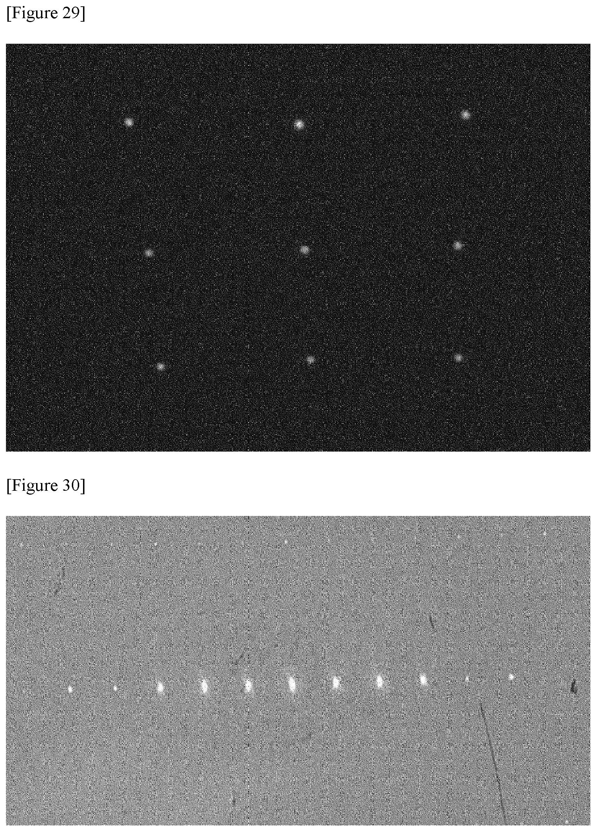

Figure 29 is a result of confirming split light in the same manner as in Example 1 for the beam splitter. Through adjustment of the pitch form, it can be confirmed that more than three multiple split light rays can be formed even by using one orientation layer.

### Example 8.

A beam splitter was manufactured by laminating the second orientation layer of Example 3 and the orientation layer of Example 7. At this time, the angle formed by the azimuth angle change directions of both orientation layers was set to be about 90 degrees.

Figure 30 is a result of confirming split light in the same manner as in Example 1 for the beam splitter. At this time, the incident light was incident toward the orientation layer of Example 7 among the two orientation layers. From the view, it can be confirmed that multiple split light rays can be obtained from the beam splitter.

### Example 9.

Two orientation layers having a 180-degree bidirectional pitch of Example 7 were formed. In both orientation layers, the distance from the liquid crystal LC1 to the liquid crystal LC2 in Figure 6 was about 15 µm or so, and the distance from the liquid crystal LC2 to the liquid crystal LC3 was also about 15 µm or so. However, one orientation layer (first orientation layer) had a thickness of about 2.7 µm or so, and the other orientation layer (the second orientation layer) had a thickness of about 3.0 µm or so.

A beam splitter was manufactured by laminating the two orientation layers. At this time, the angle formed by the azimuth angle change directions of the two orientation layers was about 90 degrees.

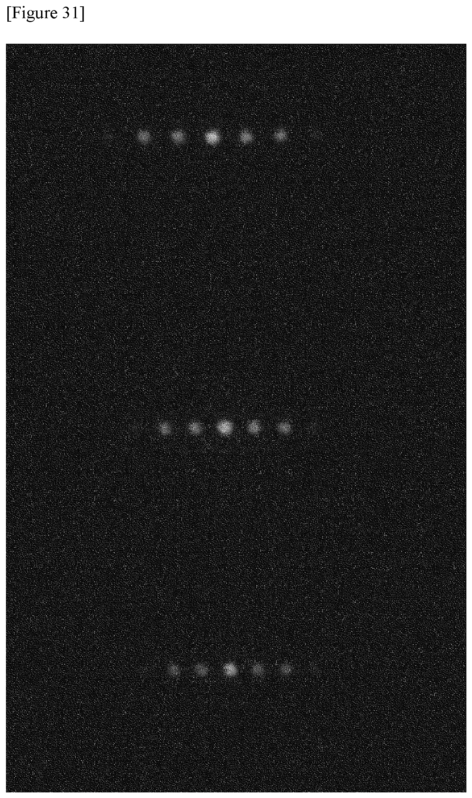

Figure 31 is a result of confirming split light in the same manner as in Example 1 for the beam splitter. At this time, the incident light was incident toward the first orientation layer among the two orientation layers. From the view, it can be confirmed that multiple split light rays can be obtained from the beam splitter.

## Claims

1. A beam splitter, comprising:
a geometric phase orientation layer,
wherein the geometric phase orientation layer has transmittance of a zero-order transmitted light ray in a range of 3% or more.

2. A beam splitter, configured to split incident light having a wavelength of λ into two or more split light rays,
wherein the beam splitter comprises a geometric phase orientation layer comprising an oriented liquid crystal compound, and
the geometric phase orientation layer satisfies Equation 4 below: $Δn \times T - λ / 2 \neq 0$
wherein the Δn is the refractive index anisotropy of the liquid crystal compound, the T is a thickness of the geometric phase orientation layer, and the λ is the wavelength of the incident light to be split.

3. The beam splitter according to claim 1 or 2, wherein the geometric phase orientation layer is configured to generate a zero-order transmitted light ray, a first-order diffracted light ray, and a negative first-order diffracted light ray from the incident light.

4. The beam splitter according to claim 3, wherein the sum of the transmittance of the zero-order transmitted light ray, the transmittance of the first-order diffracted light ray, and the transmittance of the negative first-order diffracted light ray is 90% or more.

5. The beam splitter according to claim 3, wherein the average of the transmittance of the zero-order transmitted light ray, the transmittance of the first-order diffracted light ray, and the transmittance of the negative first-order diffracted light ray is in a range of 5% to 70%.

6. The beam splitter according to claim 5, wherein the standard deviation of the transmittance of the zero-order transmitted light ray, the transmittance of the first-order diffracted light ray, and the transmittance of the negative first-order diffracted light ray is 20% or less.

7. The beam splitter according to claim 3, wherein the smaller angle among angles formed by the zero-order transmitted light ray and the first-order diffracted light ray and the smaller angle among angles formed by the zero-order transmitted light ray and the negative first-order diffracted light ray are each in a range of 1 degree to 70 degrees.

8. The beam splitter according to claim 1 or 2, wherein the geometric phase orientation layer is a geometric phase grating orientation layer.

9. A dot projector, comprising:
the beam splitter of any one of claims 1 to 8; and
a light source configured to irradiate the beam splitter with light.

10. A sensing device comprising the beam splitter of any one of claims 1 to 8.

11. A facial recognition device comprising the beam splitter of any one of claims 1 to 8.
